(19) Europäisches Patentamt / European Patent Office / Office européen des brevets

(11) **EP 4 564 692 A1**

(12) **EUROPEAN PATENT APPLICATION**
published in accordance with Art. 153(4) EPC

(43) Date of publication:
**04.06.2025  Bulletin 2025/23**

(21) Application number: **22952277.6**

(22) Date of filing: **26.07.2022**

(51) International Patent Classification (IPC):
**H04B 7/06** $^{(2006.01)}$

(52) Cooperative Patent Classification (CPC):
**H04B 7/06**

(86) International application number:
**PCT/CN2022/108049**

(87) International publication number:
**WO 2024/020812 (01.02.2024 Gazette 2024/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Dehns Germany Partnerschaft mbB**
**Theresienstraße 6-8**
**80333 München (DE)**

(54) **COEFFICIENT INDICATION METHOD AND APPARATUS, AND STORAGE MEDIUM**

(57)    The present application relates to the field of mobile communications. Disclosed are a coefficient indication method and apparatus, and a storage medium. The method comprises: a terminal receiving configuration information sent by a network device, wherein the configuration information is used for configuring codebook parameters of a plurality of transmission reception point (TRP) groups, and each TRP group comprises at least one TRP; determining first indication information according to the configuration information, wherein the first indication information is used for indicating the position of a non-zero coefficient in a combination coefficient, the combination coefficient is a coefficient determined by the terminal according to the codebook parameters of the plurality of TRP groups, and the combination coefficient is used for the network device to perform precoding calculation; and sending the first indication information to the network device. The present application expands the manner in which a terminal reports the position of a non-zero coefficient in a combination coefficient, and is used for a network device to obtain non-zero coefficient position information corresponding to a plurality of TRPs, thereby ensuring the reliability of communication between the terminal and the network device.

FIG. 3

**Description**

**TECHNICAL FIELD**

The present disclosure relates to the field of mobile communications, and in particular to a method and apparatus for indicating a coefficient, and a storage medium.

**BACKGROUND**

In a mobile communication system, a network device and a terminal can communicate with each other, and the network device can use the determined codebook structure to perform precoding calculations, so that the network device can send precoded data to the terminal.

Specifically, according to the currently used codebook structure, the terminal reports a combination coefficient corresponding to the currently used codebook structure in a differential manner in a polarization direction, so that the network device performs precoding based on the combination coefficient reported by the terminal. However, when a plurality of network devices configure a plurality of Transmission Reception Points (TRPs) to jointly serve one terminal, how the terminal reports combination coefficients for the plurality of TRPs becomes an urgent problem to be solved.

**SUMMARY**

Embodiments of the present disclosure provide a method and apparatus for indicating a coefficient, and a storage medium, which expands a manner in which the terminal reports a position of a non-zero coefficient among a combination coefficient, and is used for a network device to obtain non-zero coefficient position information corresponding to a plurality of TRPs, thereby ensuring reliability of communication between the terminal and the network device. The technical solution is as follows.

According to a first aspect of the present disclosure, there is provided a method for indicating a coefficient, which is performed by a terminal. The method includes:

receiving configuration information sent by a network device, wherein the configuration information is configured to configure codebook parameters of a plurality of TRP groups, and each TRP group includes at least one TRP;
determining first indication information according to the configuration information, wherein the first indication information is configured to indicate a position of a non-zero coefficient among combination coefficients, the combination coefficients are coefficients determined by the terminal according to the codebook parameters of the plurality of TRP groups, and the combination coefficients are used by the network device to perform precoding calculation; and
sending the first indication information to the network device.

According to a second aspect of the present disclosure, there is provided a method for indicating a coefficient, which is performed by a network device. The method includes:

sending configuration information to a terminal, wherein the configuration information is configured to configure codebook parameters of a plurality of TRP groups, and each TRP group includes at least one TRP; and
receiving first indication information sent by the terminal, wherein the first indication information is determined by the terminal according to the configuration information, the first indication information is configured to indicate a position of a non-zero coefficient among combination coefficients, the combination coefficients are coefficients determined by the terminal according to the codebook parameters of the plurality of TRP groups, and the combination coefficients are used by the network device to perform precoding calculation.

According to a third aspect of the present disclosure, there is provided an apparatus for indicating a coefficient, including:

a receiving module, configured to receive configuration information sent by a network device, wherein the configuration information is configured to configure codebook parameters of a plurality of TRP groups, and each TRP group includes at least one TRP;
a determination module, configured to determine first indication information according to the configuration information, wherein the first indication information is configured to indicate a position of a non-zero coefficient among combination coefficients, the combination coefficients are coefficients determined by the terminal according to the codebook parameters of the plurality of TRP groups, and the combination coefficients are used by the network device to perform precoding calculation; and
a sending module, configured to send the first indication information to the network device.

According to a fourth aspect of the present disclosure, there is provided an apparatus for indicating a coefficient, including:

a sending module, configured to send configuration information to a terminal, wherein the configuration information is configured to configure codebook parameters of a plurality of TRP groups, and each TRP group includes at least one TRP; and
a receiving module, configured to receive first indication information sent by the terminal, wherein the first indication information is determined by the terminal according to the configuration information, the first indication information is configured to indicate a position of a non-zero coefficient among combination coefficients, the combination coefficients are coefficients determined by the terminal according to the codebook parameters of the plurality of TRP groups, and the combination coefficients are used by the network device to perform precoding calculation.

According to a fifth aspect of the present disclosure, there is provided a terminal, including a processor; a transceiver connected to the processor; and a memory configured to store executable instructions of the processor, wherein the processor is configured to load and execute the executable instructions to implement the method for indicating the coefficient as described in the above aspect.

According to a sixth aspect of the present disclosure, there is provided a network device, including a processor; a transceiver connected to the processor; and a memory configured to store executable instructions of the processor, wherein the processor is configured to load and execute the executable instructions to implement the method for indicating the coefficient as described in the above aspect.

According to a seventh aspect of the present disclosure, there is provided a communication system, including a terminal and a network device, wherein the terminal is configured to implement the method for indicating the coefficient as described in the first aspect above, and the network device is configured to implement the method for indicating the coefficient as described in the second aspect above.

According to an eighth aspect of the present disclosure, there is provided a computer readable storage medium having executable program codes stored thereon. The executable program codes are loaded and executed by a processor to implement the method for indicating the coefficient as described in the above aspect.

According to a ninth aspect of the present disclosure, there is provided a chip, including a programmable logic circuit and/or program instructions, wherein the chip, when running on a terminal or a network device, is configured to implement the method for indicating the coefficient as described in the above aspect.

According to a tenth aspect of present disclosure, there is provided a computer program product, which, when performed by a processor of a terminal or a network device, is configured to implement the method for indicating the coefficient as described in the above aspect.

The present disclosure provides a solution that supports the indication of the position of the non-zero coefficient among the combination coefficients of the plurality of TRPs. The terminal determines, according to the codebook parameters of the plurality of TRPs, the position of the non-zero coefficient among the combination coefficients of the plurality of TRPs, which expands a manner in which the terminal reports the position of the non-zero coefficient among the combination coefficients, and is used for the network device to obtain non-zero coefficient position information corresponding to the plurality of TRPs, thereby ensuring reliability of communication between the terminal and the network device.

**BRIEF DESCRIPTION OF THE DRAWINGS**

In order to clearly illustrate the technical solution of embodiments of present disclosure, a brief description of drawings used in the embodiments is given below. Obviously, the drawings in the following description are only part of the embodiments of present disclosure, and for those skilled in the art, other drawings can be obtained according to these drawings without inventive works.

FIG. 1 shows a block diagram of a communication system provided by an embodiment of the present disclosure;
FIG. 2 shows a block diagram of another communication system provided by an embodiment of the present disclosure;
FIG. 3 shows a flowchart of a method for indicating a coefficient provided by an embodiment of the present disclosure;
FIG. 4 shows a flowchart of a method for transmitting a quantization coefficient provided by an embodiment of the present disclosure;
FIG. 5 shows a flowchart of a method for indicating a coefficient provided by an embodiment of the present disclosure;

FIG. 6 shows a flowchart of a method for indicating a coefficient provided by an embodiment of the present disclosure;

FIG. 7 shows a block diagram of an apparatus for indicating a coefficient provided by an embodiment of the present disclosure;

FIG. 8 shows a block diagram of another apparatus for indicating a coefficient provided by an embodiment of the present disclosure;

FIG. 9 shows a block diagram of an apparatus for indicating a coefficient provided by an embodiment of the present disclosure; and

FIG. 10 shows a schematic structural diagram of a communication device provided by an embodiment of the present disclosure.

## DETAILED DESCRIPTION

In order to make the purpose, technical solution and advantages of present disclosure clearer, implementations of present disclosure will be further described in detail in combination with the accompanying drawings.

Reference will now be made in detail to embodiments, examples of which are illustrated in the accompanying drawings. The following description refers to the accompanying drawings in which the same numbers in different drawings represent the same or similar elements unless otherwise represented. Implementations set forth in the following description of the embodiments do not represent all implementations consistent with the present disclosure. Instead, they are merely examples of apparatuses and methods consistent with some aspects related to the present disclosure as recited in the appended claims.

The terms used in embodiments of the present disclosure are merely for the purpose of describing particular embodiments and are not intended to limit the present disclosure. As used in the present disclosure and the appended claims, the singular forms "a", and "the" are intended to include the plural forms as well, unless the context clearly indicates otherwise. It should also be understood that the term "and/or" as used herein refers to and includes any or all possible combinations of one or more of the associated listed items.

It should be understood that, although the terms first, second, third, etc. may be used in the present disclosure to describe various information, such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein can be interpreted as "upon" or "when" or "in response to determination".

It should be noted that information (including but not limited to user device information, user personal information, etc.), data (including but not limited to data for analysis, stored data, displayed data, etc.) and signals involved in the present disclosure are all authorized by users or fully authorized by all parties, and the collection, use and processing of relevant data must comply with relevant laws, regulations and standards of relevant countries and regions.

Several terms provided in embodiments of the present disclosure are briefly introduced first.

Coordinated Multi-Point (CoMP) Transmission Technology: it refers to m-TRP (Multi-TRP, mTRP)/panel providing data services for one user. The CoMP transmission technology includes two transmission modes, that is, Coherent Joint Transmission (CJT) and Non-Coherent Joint Transmission (NCJT). CJT means that each data stream will be mapped to the m-TRP/Panel participating in the collaboration through a weighted vector. CJT is equivalent to splicing a plurality of sub-arrays into a higher-dimensional virtual array to obtain higher beamforming or precoding gain.

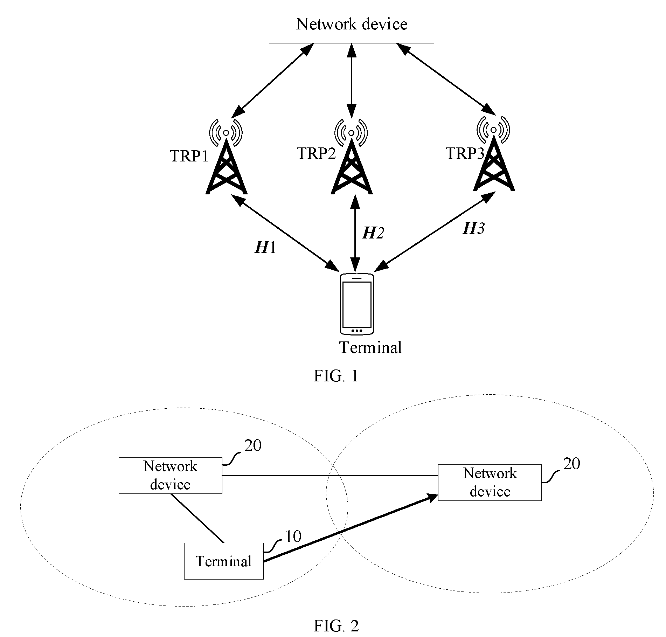

For example, as shown in FIG. 1, a network device communicates with a terminal through three TRPs, and the three TRPs are transmitted through CJT.

In some embodiments, when a plurality of TRPs perform CJT, the following optional codebook structure can be used to calculate the user's downlink data transmission precoding.

$$\text{First codebook structure:} \begin{bmatrix} (a_1 p_1) \times W_{1,1} \widetilde{W}_{2,1} W_{f,1}^H \\ \vdots \\ (a_n p_n) \times W_{1,n} \widetilde{W}_{2,n} W_{f,n}^H \end{bmatrix}$$

Where, $a_n$ and $p_n$ represent a phase and an amplitude factor corresponding to the n-th TRP, respectively. $W_{1,n}$ represents a Spatial Domain (SD) basis vector corresponding to the n-th TRP, $\widetilde{W}_{2,n}$ represents a combination coefficient corresponding to the n-th TRP, and $W_{f,n}$ represents a Frequency Domain (FD) basis vector corresponding to the n-th TRP. H is the conjugate transpose.

$$\text{Second codebook structure:} \begin{bmatrix} (a_1 p_1) \times \boldsymbol{W}_{SF,1} \widetilde{\boldsymbol{W}}_{2,1} \\ \vdots \\ (a_n p_n) \times \boldsymbol{W}_{SF,n} \widetilde{\boldsymbol{W}}_{2,n} \end{bmatrix}$$

Where, $a_n$ and $p_n$ represent a phase and an amplitude factor corresponding to the n-th TRP, respectively. $\widetilde{W}_{2,n}$ represents a combination coefficient corresponding to the n-th TRP. $\boldsymbol{W}_{SF,n}$ represents a combination of SD and FD basis vectors corresponding to the n-th TRP.

$$\text{Third codebook structure:} \begin{bmatrix} \boldsymbol{W}_{1,1} & 0 & 0 & 0 \\ 0 & \ddots & 0 & 0 \\ 0 & 0 & & \boldsymbol{W}_{1,n} \\ 0 & 0 & & \end{bmatrix} \widetilde{\boldsymbol{W}}_2 \boldsymbol{W}_f^H$$

$\boldsymbol{W}_{1,n}$ represents a SD basis vector corresponding to the n-th TRP, $\widetilde{\boldsymbol{W}}_2$ represents combination coefficients corresponding to N TRPs, and $\boldsymbol{W}_f$ represents FD basis vectors corresponding to the N TRPs. H is the conjugate transpose.

The following is an explanation of application scenarios of the present disclosure.

FIG. 2 shows a block diagram of another communication system provided by an embodiment of the present disclosure. The communication system may include a terminal 10 and a network device 20.

There may be several terminals 10. One or more terminals 10 may be disposed in a cell managed by each network device 20. The terminal 10 may include various handheld devices, on-board devices, wearable devices, computing devices with wireless communication functions or other processing devices connected to wireless modems, as well as various forms of user equipment (UEs), mobile stations (MSs), etc. For the convenience of description, in the embodiments of present disclosure, the devices mentioned above are collectively referred to as terminals.

The network device 20 is a device deployed in an access network to provide the terminal 10 with a wireless communication function. For the convenience of description, in embodiments of the present disclosure, the above-mentioned devices that provide wireless communication functions for the terminal 10 are collectively referred to as network devices. A connection can be established between the network device 20 and the terminal 10 through an air interface, so that communication is performed through the connection, including the interaction of signaling and data. There may be several network devices 20, and two adjacent network devices 20 can also communicate with each other in a wired or wireless manner. The terminal 10 can perform the coefficient indication with different network devices 20, that is, establish connections with different network devices 20.

The network device 20 may include various forms of macro base stations, micro base stations, relay stations, access points, and the like. In systems using different radio access technologies, names of devices with network device functions may be different, for example, in the 5G New Radio (NR) system, they are called gNodeBs or gNBs. As the communication technology evolves, the designation "network device" may change.

The "5GNR system" in embodiments of the present disclosure may also be referred to as a 5G system or an NR system. But those skilled in the art can understand its meaning. The technical solution described in the embodiments of the present disclosure may be applicable to the 5G NR system, and may also be applicable to the subsequent evolution system of the 5G NR system.

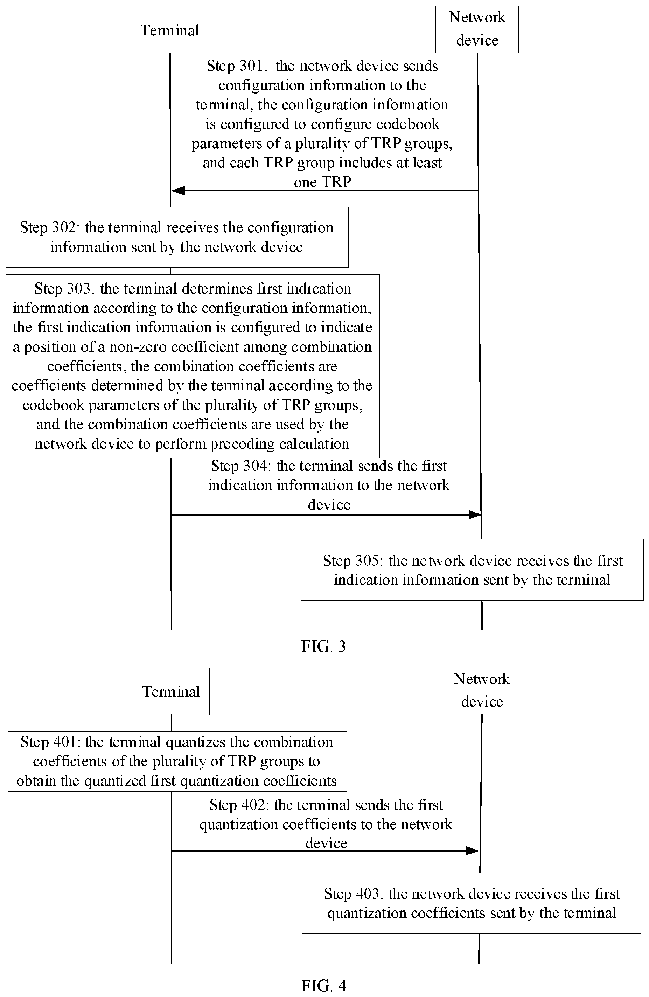

FIG. 3 shows a flowchart of a method for indicating a coefficient provided by an embodiment of the present disclosure, which can be exemplarily applied to the terminal and the network device shown in FIG. 2. The method includes at least part of the following contents.

In step 301, the network device sends configuration information to the terminal, the configuration information is configured to configure codebook parameters of a plurality of TRP groups, and each TRP group includes at least one TRP.

In step 302, the terminal receives the configuration information sent by the network device.

In embodiments of the present disclosure, the network device configures for the terminal the codebook parameters of the plurality of TRP groups, so that the terminal can determine a codebook parameter corresponding to a TRP group used for communication.

Each TRP group includes the at least one TRP. That is, the number of TRPs included in a TRP group includes two cases: one case is that the TRP group includes one TRP, and the other case is that the TRP group includes a plurality of TRPs.

In some embodiments, if a TRP group includes one TRP, that is, one TRP is called a TRP group. In a case where the TRP group includes one TRP, the TRP group may also be called a TRP, which is not limited in embodiments of the present disclosure.

In some embodiments, the codebook parameter includes at least one of the number of SD basis vectors, the number of ports, the number of FD basis vectors, and the number of pairs of SD basis vectors and FD basis vectors.

In step 303, the terminal determines first indication information according to the configuration information, the first indication information is configured to indicate a position of a non-zero coefficient among combination coefficients, the combination coefficients are coefficients determined by the terminal according to the codebook parameters of the plurality of TRP groups, and the combination coefficients are used by the network device to perform precoding calculation.

In embodiments of the present disclosure, after the terminal determines the codebook parameters based on the configuration information sent by the network device, it can determine, according to the configured codebook parameters, the first indication information for indicating the position of the non-zero coefficient among the combination coefficients.

The combination coefficients sent by the terminal are the coefficients determined for the plurality of TRP groups, and the network device can perform the precoding calculation based on the combination coefficients.

In step 304, the terminal sends the first indication information to the network device.

In step 305, the network device receives the first indication information sent by the terminal.

In an embodiment of the present disclosure, the terminal indicates, through the first indication information, the combination coefficients corresponding to the plurality of TRP groups and after the network device receives the first indication information sent by the terminal, it can determine the combination coefficient generated by the terminal for each TRP group. The network device performs the precoding calculation based on the position of the non-zero coefficient among the combination coefficients in the first indication information.

It should be noted that the steps executed by the terminal in embodiments of the present disclosure can independently form a new embodiment, and the steps executed by the network device can also independently form a new embodiment, which are not limited by the present disclosure.

The present disclosure provides a solution that supports the indication of the position of the non-zero coefficient among the combination coefficients of the plurality of TRPs. The terminal determines, according to the codebook parameters of the plurality of TRPs, the position of the non-zero coefficient among the combination coefficients of the plurality of TRPs, which expands a manner in which the terminal reports the position of the non-zero coefficient among the combination coefficients, and is used for the network device to obtain non-zero coefficient position information corresponding to the plurality of TRPs, thereby ensuring reliability of communication between the terminal and the network device.

The embodiment shown in FIG. 3 takes an example in which the terminal can indicate the position of the combination coefficient for illustration. The following is an explanation of an indication manner for the first indication information that can be adopted by the terminal.

In some embodiments, the first indication information is bitmap information, and each bit in the bitmap information is configured to indicate whether a coefficient corresponding to the bit is a non-zero coefficient.

In an embodiment of the present disclosure, the bitmap information includes a plurality of bits, and each bit indicates whether the combination coefficient at the corresponding position is the non-zero coefficient.

In some embodiments, the bitmap information is represented by a bitmap. Alternatively, the bitmap information is represented by other manners.

For example, when a bit is 0, it indicates that a combination coefficient corresponding to the bit is the non-zero coefficient, and when the bit is 1, it indicates that the combination coefficient corresponding to the bit is not the non-zero coefficient. For another example, when the bit is 1, it indicates that the combination coefficient corresponding to the bit is the non-zero coefficient, and when the bit is 0, it indicates that the combination coefficient corresponding to the bit is not the non-zero coefficient.

It should be noted that a size of the first indication information in embodiments of the present disclosure is determined according to the codebook parameters.

In some embodiments, the terminal may determine the size of the first indication information based on the number of SD basis vectors or the number of ports and the number of FD basis vectors, or determine the size of the first indication information based on the number of pairs of SD and FD basis vectors, or determine the size of the first indication information in other ways, which is not limited in embodiments of the present disclosure.

In some embodiments, when the codebook parameters of the plurality of TRP groups are the same, one piece of bitmap information is determined according to the configuration information, and the bitmap information indicates the position of the non-zero coefficient among the combination coefficients corresponding to the plurality of TRP groups.

In an embodiment of the present disclosure, the codebook parameters of the plurality of TRP groups configured by the network device for the terminal are the same, that is, the codebook parameter corresponding to each TRP is the same. In this case, one piece of bitmap information can be configured, and the position of the non-zero coefficient among the combination coefficients corresponding to the plurality of TRP groups can be indicated by this bitmap information.

For example, one piece of bitmap information with $N*2L_n*M_n$ bits is used for indication, or one piece of bitmap information with $N*K_n$ bits is used for indication, where N is the number of TRP groups used for CJT, $L_n$ is the number of SD basis vectors or the number of ports of the n-th TRP group, $M_n$ is the number of FD basis vectors of the n-th TRP group, and $K_n$ is the number of pairs of SD and FD basis vectors of the n-th TRP group.

In some embodiments, when codebook parameters of at least two TRP groups among the plurality of TRP groups are different, a plurality of pieces of bitmap information are determined according to the configuration information, and each piece of bitmap information indicates a position of a non-zero coefficient among a combination coefficient corresponding to at least one TRP group.

In an embodiment of the present disclosure, when the codebook parameters of the at least two TRP groups among the plurality of TRP groups configured by the network device for the terminal are different, that is, there are at least two TRPs with different codebook parameters. In this case, the plurality of pieces of bitmap information can be configured, and positions of non-zero coefficients among combination coefficients corresponding to different TRP groups with different codebook parameters are respectively indicated through the plurality of pieces of bitmap information.

For example, S pieces of bitmap information are used for indication, $S \leq N$, N is the number of TRP groups used for CJT, a size of the bitmap information is $2L_n*M_n$ or $K_n$ bits, or $X*2L_n*M_n$ or $X*K_n$ bits, where X represents that the number of SD basis vectors or the number of ports, the number of FD basis vectors, and the number of pairs of SD and FD basis vectors corresponding to X TRP groups are the same, N is the number of TRP groups used for CJT, $L_n$ is the number of SD basis vectors or the number of ports of the n-th TRP group, $M_n$ is the number of FD basis vectors of the n-th TRP group, and $K_n$ is the number of pairs of SD and FD basis vectors of the n-th TRP group.

In some other embodiments, the first indication information is a combination number, and the combination number has a mapping relationship with the position of the non-zero coefficient.

In embodiments of the present disclosure, the combination number has the mapping relationship with the position of the non-zero coefficient, that is, one combination number corresponds to positions of a group of non-zero coefficients. After the terminal determines the non-zero coefficient among the combination coefficient, it can determine the corresponding combination number according to the position of the non-zero coefficient and the mapping relationship, and then send the first indication information to the network device through the first indication information.

In some embodiments, when the codebook parameters of the plurality of TRP groups are the same, one combination number is determined according to the configuration information, and indication information corresponding to the combination number indicates the positions of the non-zero coefficients among the combination coefficients corresponding to the plurality of TRP groups.

In an embodiment of the present disclosure, the codebook parameters of the plurality of TRP groups configured by the network device for the terminal are the same, that is, the codebook parameter corresponding to each TRP is the same. In this case, one combination number can be configured, which can indicate the positions of the non-zero coefficients among the combination coefficients corresponding to the plurality of TRP groups.

It should be noted that the size of the first indication information in embodiments of the present disclosure is determined according to the codebook parameters.

In some embodiments, the terminal may determine the size of the first indication information based on the number of SD basis vectors or the number of ports and the number of FD basis vectors, or determine the size of the first indication information based on the number of pairs of SD and FD basis vectors, or determine the size of the first indication information in other ways, which is not limited in embodiments of the present disclosure. $\left\lceil \log_2 C_{NK_n}^{K_{0,tot}} \right\rceil$ or $\left\lceil \log_2 C_{NK_n-Y}^{K_{0,tot}-Y} \right\rceil$ bits are used for indication, that is, the combination number indicates the position of the non-zero coefficient, where N is the number of TRP groups used for CJT, $K_{0,tot}$ represents the number of non-zero coefficients corresponding to all TRP groups, Y represents the number of strongest coefficients corresponding to N TRP groups, and $K_n$ is the number of pairs of SD and FD basis vectors of the n-th TRP group.

In some embodiments, when codebook parameters of at least two TRP groups among the plurality of TRP groups are different, a plurality of combination numbers are determined according to the configuration information, and each combination number corresponds to a position of a non-zero coefficient among a combination coefficient corresponding to at least one TRP group.

In an embodiment of the present disclosure, when the codebook parameters of the at least two TRP groups among the plurality of TRP groups configured by the network device for the terminal are different, that is, there are at least two TRPs with different codebook parameters. In this case, the plurality of combination numbers can be configured, and positions of non-zero coefficients among combination coefficients corresponding to different TRP groups with different codebook parameters are respectively indicated by the plurality of combination numbers.

For example, S combination numbers are used for indication, $S \leq N$, and the indication overhead of each combination number is $\left\lceil \log_2 C_{K_n}^{K_{0,n}} \right\rceil + \left\lceil \log_2 K_{0,n} \right\rceil$ bits or $\left\lceil \log_2 C_{XK_n}^{Z} \right\rceil + \left\lceil \log_2 Z \right\rceil$ bits, where N is the number of TRP groups used for CJT, Z represents combination coefficients corresponding to X TRP groups, and the number of SD basis vectors or the number of ports, the number of FD basis vectors, and the number of pairs of SD and FD basis vectors corresponding to the X TRP groups are the same. $K_{0,n}$ represents the number of non-zero coefficients corresponding to the n-th TRP group, and $K_n$ is the number of pairs of SD and FD basis vectors of the n-th TRP group.

In the solution provided by embodiments of the present disclosure, the terminal can indicate the positions of the non-zero coefficients among the combination coefficients corresponding to the plurality of TRP groups through different first indication information, thereby expanding the diversity of indicating the non-zero coefficient through the first indication information.

The embodiment shown in FIG. 3 illustrates that the terminal can indicate the position of the non-zero coefficient in the combination coefficient through the first indication information. In another embodiment, the terminal can also quantize the combination coefficient and then report the quantized combination coefficient. A solution of the terminal sending the quantized combination coefficient is described below. FIG. 4 shows a flowchart of a method for transmitting a quantization coefficient provided by an embodiment of the present disclosure, which can be exemplarily applied to the terminal and the network device shown in FIG. 2, and the method includes at least part of the following contents.

In step 401, the terminal quantizes the combination coefficients of the plurality of TRP groups to obtain the quantized first quantization coefficients.

In step 402, the terminal sends the first quantization coefficients to the network device.

In step 403, the network device receives the first quantization coefficients sent by the terminal.

In embodiments of the present disclosure, after the terminal determines the combination coefficients of the plurality of TRP groups, it can quantizes the determined combination coefficients of the plurality of TRP groups to obtain the quantized first quantization coefficients. It can also be understood that the terminal quantizing the combination coefficients of the plurality of TRP groups means that the combination coefficients are expressed in other ways to facilitate the terminal to report the combination coefficients to the network device, that is, the terminal sends the first quantization coefficients to the network device, and the network device receives the first quantization coefficients sent by the terminal.

The first quantization coefficient is a value of the non-zero coefficient among the combination coefficients, and the network device performs precoding according to the position and value of the non-zero coefficient.

**Quantization manner 1:** the terminal normalizes the combination coefficients corresponding to the plurality of TRP groups to obtain the normalized first normalization coefficients, and then differentially quantizes the obtained first normalization coefficients according to a polarization direction to obtain the first quantization coefficients.

Normalizing the combination coefficients corresponding to the plurality of TRP groups refers to selecting the largest combination coefficient from the combination coefficients corresponding to the plurality of TRP groups, and obtaining a value by dividing each combination coefficient by the largest combination coefficient to form the first normalization coefficient.

Differential quantization means that for a combination coefficient, a reference amplitude and a differential coefficient are used to jointly indicate the combination coefficient, and the reference amplitude and the differential coefficient are quantized.

In embodiments of the present disclosure, the terminal normalizes the combination coefficients corresponding to the plurality of TRP groups to obtain the normalized first normalization coefficients, and then uses the reference amplitudes and the differential coefficients to jointly indicate the first normalization coefficients, thereby obtaining the first quantization coefficients after quantizing the first normalization coefficients. It can also be understood that the terminal normalizes the combination corresponding to all TRPs in the plurality of TRP groups to obtain the normalized first normalization coefficients.

In some embodiments, normalizing the combination coefficients corresponding to the plurality of TRP groups refers to determining the largest combination coefficient among the combination coefficients corresponding to the plurality of TRP groups, and dividing each combination coefficient corresponding to the plurality of TRP groups by the largest combination coefficient to obtain the first normalization coefficient.

In some embodiments, the polarization direction includes a first polarization direction and a second polarization direction. Differentially quantizing, by the terminal, the first normalization coefficient according to the polarization direction to obtain the first quantization coefficient includes: the terminal determines, according to the first normalization coefficient, a reference amplitude and the corresponding differential coefficient of each TRP group in the first polarization direction and a reference amplitude and the corresponding differential coefficient of each TRP group in the second polarization direction and quantizes the reference amplitude and the corresponding differential coefficient of each TRP group in the first polarization direction and the reference amplitude and the corresponding differential coefficient of each TRP group in the second polarization direction to obtain the first quantization coefficient.

It should be noted that in embodiments of the present disclosure, the reference amplitude of the TRP group in the first polarization direction and the reference amplitude of the TRP group in the second polarization direction include a plurality of cases.

First case: reference amplitudes of the plurality of TRP groups in the first polarization direction are the same, and reference amplitudes of the plurality of TRP groups in the second polarization reference direction are the same.

Second case: reference amplitudes of at least two of the plurality of TRP groups in the first polarization direction are different, reference amplitudes of the at least two of the plurality of TRP groups in the second polarization reference direction are different, reference amplitudes of a plurality of TRPs included in each TRP group in the first polarization direction are the same or different, and reference amplitudes of the plurality of TRPs included in each TRP group in the second polarization direction are the same or different。

Third case: the reference amplitudes of the at least two of the plurality of TRP groups in the first polarization direction are different, the reference amplitudes of the plurality of TRP groups in the second polarization reference direction are the same, and the reference amplitudes of the plurality of TRPs included in each TRP group in the first polarization direction are the same or different.

Fourth case: the reference amplitudes of the plurality of TRP groups in the first polarization direction are the same, the reference amplitudes of the at least two of the plurality of TRP groups in the second polarization reference direction are different, and the reference amplitudes of the plurality of TRPs included in each TRP group in the second polarization direction are the same or different.

In addition, the above embodiment illustrates that the terminal can perform differential quantization on the first normalization coefficient, and in another embodiment, the terminal will also send second indication information to the network device, and the second indication information is configured to indicate that at least one of the largest reference amplitude or the strongest coefficient is not to be quantized and reported, and the network device will receive the second indication information sent by the terminal.

The largest reference amplitude is the maximum reference amplitude among the reference amplitudes included in the first quantization coefficients, and the strongest coefficient is a coefficient with the strongest differential coefficient among the first quantization coefficients.

In some embodiments, when the second indication information is configured to indicate the largest reference amplitude and the strongest coefficient, one piece of second indication information can be used to indicate both the largest reference amplitude and the strongest coefficient, or two pieces of second indication information can be used to respectively indicate the largest reference amplitude and the strongest coefficient.

It should be noted that a size of the second indication information for indicating the largest reference amplitude is different from a size of the second indication information for indicating the strongest coefficient. It can also be understood that the second indication information for indicating the largest reference amplitude and the second indication information for indicating the strongest coefficient are two pieces of different information.

In some embodiments, the second indication information may use the bitmap information or the combination number to indicate that at least one of the largest reference amplitude or the strongest coefficient is not to be quantized and reported.

In some embodiments, the second indication information is the bitmap information, and each bit in the bitmap information is configured to indicate a position of at least one of the largest reference amplitude or the strongest coefficient of a TRP group corresponding to the bit.

In some embodiments, the codebook parameters corresponding to each TRP group are the same, and N bits of bitmap information are used to indicate the position of the largest reference amplitude. N is the number of TRP groups used for CJT. $N*2L_n*M_n$ bits or $N*K_n$ bits are used to indicate the position of the strongest coefficient.

In some embodiments, the second indication information is the combination number, and the combination number is configured to indicate a position of at least one of the largest reference amplitude or the strongest coefficient of each TRP group.

For example, the combination number uses $\lceil \log_2^N \rceil$ bits to indicate the largest reference amplitude. N is the number of TRP groups. Alternatively, the combination number uses $\lceil \log_2^{2*L_n*N} \rceil$ or $\lceil \log_2^{K_{0,tot}} \rceil$ or $\lceil \log_2^{N*2*L_n*M_n} \rceil$ or $\lceil \log_2^{N*2*K_n} \rceil$ to indicate the position of the strongest coefficient. N is the number of TRP groups used for CJT, $K_{0,tot}$ represents the number of non-zero coefficients corresponding to all TRP groups, $L_n$ is the number of SD basis vectors or the number of ports of the n-th TRP group, $K_n$ is the number of pairs of SD and FD basis vectors of the n-th TRP group. $M_n$ is the number of FD basis vectors of the n-th TRP group.

The differential quantization involved in the present disclosure is explained below by way of example.

For example, if a TRP group includes one TRP, then the present disclosure involves two TRPs serving one terminal through CJT, and the third codebook structure in the above embodiment is used between the terminal and the network device to calculate the precoding of data transmission, and the reference amplitudes of the plurality of TRP groups in the first polarization direction are the same, and the reference amplitudes of the plurality of TRP groups in the second polarization reference direction are the same. The network device configures for the terminal that the number M of FD basis vectors corresponding to two TRPs is 4, and the number of SD basis vectors corresponding to each TRP is $L_n = 2$. The terminal uses a codebook calculation method according to the downlink channel from the two TRPs to the terminal to obtain a combination coefficient matrix corresponding to the two TRPs:

$$\widetilde{W}_2 = \begin{bmatrix} c_{1,1}^{0,1} & c_{1,2}^{0,1} & c_{1,3}^{0,1} & c_{1,4}^{0,1} \\ c_{2,1}^{0,1} & c_{2,2}^{0,1} & c_{2,3}^{0,1} & c_{2,4}^{0,1} \\ c_{3,1}^{1,1} & c_{3,2}^{1,1} & c_{3,3}^{1,1} & c_{3,4}^{1,1} \\ c_{4,1}^{1,1} & c_{4,2}^{1,1} & c_{4,3}^{1,1} & c_{4,4}^{1,1} \\ c_{1,1}^{0,2} & c_{1,2}^{0,2} & c_{1,3}^{0,2} & c_{1,4}^{0,2} \\ c_{2,1}^{0,2} & c_{2,2}^{0,2} & c_{2,3}^{0,2} & c_{2,4}^{0,2} \\ c_{3,1}^{1,2} & c_{3,2}^{1,2} & c_{3,3}^{1,2} & c_{3,4}^{1,2} \\ c_{4,1}^{1,2} & c_{4,2}^{1,2} & c_{4,3}^{1,2} & c_{4,4}^{1,2} \end{bmatrix}$$

where, $c_{l,m}^{p,n}$ represents a combination coefficient in the *l*-th row and *m*-th column in a combination coefficient matrix in the p-th polarization direction corresponding to the n-th TRP. First, each coefficient in $\tilde{W}_2$ is normalized, and the normalized coefficient is differentially expressed in the following manner:

$$\widetilde{\widetilde{W}}_2 = \begin{bmatrix} r_0 d_{1,1}^{0,1} & r_0 d_{1,2}^{0,1} & r_0 d_{1,3}^{0,1} & r_0 d_{1,4}^{0,1} \\ r_0 d_{2,1}^{0,1} & r_0 d_{2,2}^{0,1} & r_0 d_{2,3}^{0,1} & r_0 d_{2,4}^{0,1} \\ r_1 d_{3,1}^{1,1} & r_1 d_{3,2}^{1,1} & r_1 d_{3,3}^{1,1} & r_1 d_{3,4}^{1,1} \\ r_1 d_{4,1}^{1,1} & r_1 d_{4,2}^{1,1} & r_1 d_{4,3}^{1,1} & r_1 d_{4,4}^{1,1} \\ r_0 d_{1,1}^{0,2} & r_0 d_{1,2}^{0,2} & r_0 d_{1,3}^{0,2} & r_0 d_{1,4}^{0,2} \\ r_0 d_{2,1}^{0,2} & r_0 d_{2,2}^{0,2} & r_0 d_{2,3}^{0,2} & r_0 d_{2,4}^{0,2} \\ r_1 d_{3,1}^{1,2} & r_1 d_{3,2}^{1,2} & r_1 d_{3,3}^{1,2} & r_1 d_{3,4}^{1,2} \\ r_1 d_{4,1}^{1,2} & r_1 d_{4,2}^{1,2} & r_1 d_{4,3}^{1,2} & r_1 d_{4,4}^{1,2} \end{bmatrix}$$

where $r_0$ and $r_1$ represent reference amplitudes of the two TRPs in the first polarization direction and the second polarization direction, respectively, and $d_{l,m}^{p,n}$ represents a differential coefficient in the *l*-th row and *m*-th column in a combination coefficient matrix in the p-th polarization direction corresponding to the n-th TRP.

Assuming that the strongest coefficient in the above equation is located in the first polarization direction of the first TRP, the reference amplitude in the above equation $r_0 = 1$, and the reference amplitude is not reported.

For another example, the reference amplitudes of the two TRPs in the first polarization direction are different, and the reference amplitudes of the two TRPs in the second polarization reference direction are different, then the matrix obtained by normalization is the same as the above example, and the normalized coefficient is differentially expressed in the following manner:

$$\widetilde{\widetilde{W}}'_2 = \begin{bmatrix} r_0 d_{1,1}^{0,1} & r_0 d_{1,2}^{0,1} & r_0 d_{1,3}^{0,1} & r_0 d_{1,4}^{0,1} \\ r_0 d_{2,1}^{0,1} & r_0 d_{2,2}^{0,1} & r_0 d_{2,3}^{0,1} & r_0 d_{2,4}^{0,1} \\ r_1 d_{3,1}^{1,1} & r_1 d_{3,2}^{1,1} & r_1 d_{3,3}^{1,1} & r_1 d_{3,4}^{1,1} \\ r_1 d_{4,1}^{1,1} & r_1 d_{4,2}^{1,1} & r_1 d_{4,3}^{1,1} & r_1 d_{4,4}^{1,1} \\ r_2 d_{1,1}^{0,2} & r_2 d_{1,2}^{0,2} & r_2 d_{1,3}^{0,2} & r_2 d_{1,4}^{0,2} \\ r_2 d_{2,1}^{0,2} & r_2 d_{2,2}^{0,2} & r_2 d_{2,3}^{0,2} & r_2 d_{2,4}^{0,2} \\ r_3 d_{3,1}^{1,2} & r_3 d_{3,2}^{1,2} & r_3 d_{3,3}^{1,2} & r_3 d_{3,4}^{1,2} \\ r_3 d_{4,1}^{1,2} & r_3 d_{4,2}^{1,2} & r_3 d_{4,3}^{1,2} & r_3 d_{4,4}^{1,2} \end{bmatrix}$$

where $r_0$ and $r_1$ represent reference amplitudes of the first TRP in the first polarization direction and the second polarization direction, respectively, $r_2$ and $r_3$ represent reference amplitudes of the second TRP in the first polarization direction and the second polarization direction, respectively. $d_{l,m}^{p,n}$ represents a differential coefficient in the *l*-th row and *m*-th column in a combination coefficient matrix in the p-th polarization direction corresponding to the n-th TRP.

Still assuming that the strongest coefficient in the above equation is located in the first polarization direction of the first TRP, then $r_0 = 1$, this reference amplitude is not reported, other reference amplitudes $r_1$, $r_2$ and $r_3$ are quantized and reported through a=4 bits, and the non-zero differential coefficient $d_{l,m}^{p,n}$ includes a differential amplitude and a differential phase. The differential amplitude and the differential phase are quantized and reported through b=3 bits and c=4 bits, respectively.

**Quantization manner** 2: the terminal normalizes the combination coefficient corresponding to each of the plurality of TRP groups to obtain a second normalization coefficient and a normalization amplitude corresponding to each TRP group, quantizes the normalization amplitude, and differentially quantizes, according to the polarization direction, the second normalization coefficient corresponding to each TRP group to obtain the quantized first quantization coefficient.

Normalizing the combination coefficient corresponding to each of the plurality of TRP groups means extracting one normalization amplitude for a combination coefficient corresponding to each TRP group, and then obtaining a value by dividing the combination coefficient corresponding to each TRP group by the corresponding normalization amplitude to constitute the second normalization coefficient.

In some embodiments, the normalization amplitude is obtained by extracting one target amplitude for the combination coefficient corresponding to each TRP group, where the target amplitude is the maximum amplitude included in the combination coefficient corresponding to each TRP group, and then selecting the largest target amplitude from target amplitudes corresponding to the plurality of TRP groups, and dividing the target amplitude corresponding to each TRP group by the largest target amplitude to obtain the normalization amplitude corresponding to each TRP group.

Differential quantization means that for a second normalization coefficient, the reference amplitude and the differential coefficient are used to jointly indicate the second normalization coefficient, and the reference amplitude and the differential coefficient are quantized.

In some embodiments, if each TRP group includes one TRP, it means that normalization is performed on one TRP, and subsequent processes are performed in sequence; and if each TRP group includes a plurality of TRPs, it means that normalization is performed on one TRP group consisting of a plurality of TRPs, and subsequent processes are performed in sequence.

Next, two solutions for obtaining the first quantization coefficient are described.

First solution: the polarization direction includes a first polarization direction and a second polarization direction, and quantizing, by the terminal, the normalization amplitude and differentially quantizing, according to the polarization direction, the second normalization coefficient corresponding to each TRP group to obtain the quantized first quantization coefficient include: determining, according to the second normalization coefficient, the reference amplitude and the corresponding differential coefficient of each TRP group in the first polarization direction and the reference amplitude and the corresponding differential coefficient of each TRP group in the second polarization direction; and quantizing the normalization amplitude, the reference amplitude and the corresponding differential coefficient of each TRP group in the first polarization direction and the reference amplitude and the corresponding differential coefficient of each TRP group in the second polarization direction to obtain the first quantization coefficient.

Second solution: the polarization direction includes a first polarization direction and a second polarization direction, and quantizing, by the terminal, the normalization amplitude and differentially quantizing, according to the polarization direction, the second normalization coefficient corresponding to each TRP group to obtain the quantized first quantization coefficient include: determining, according to the second normalization coefficient and the normalization amplitude, the reference amplitude and the corresponding differential coefficient of each TRP group in the first polarization direction and the reference amplitude and the corresponding differential coefficient of each TRP group in the second polarization direction; and quantizing the reference amplitude and the corresponding differential coefficient of each TRP group in the first polarization direction and the reference amplitude and the corresponding differential coefficient of each TRP group in the second polarization direction to obtain the first quantization coefficient, and the reference amplitude includes a product of an initial amplitude of the second normalization coefficient and the normalization amplitude.

The initial amplitude refers to an amplitude of each TRP group in the first polarization direction and an amplitude of each TRP group in the second polarization direction determined by the terminal according to the second normalization coefficient, that is, the reference amplitudes in the two polarization directions determined according to the second normalization coefficient in the above first solution.

It should be noted that in embodiments of the present disclosure, the reference amplitude of the TRP group in the first polarization direction and the reference amplitude of the TRP group in the second polarization direction include a plurality of cases.

First case: reference amplitudes of the plurality of TRP groups in the first polarization direction are the same, and reference amplitudes of the plurality of TRP groups in the second polarization reference direction are the same.

Second case: reference amplitudes of at least two of the plurality of TRP groups in the first polarization direction are different, reference amplitudes of the at least two of the plurality of TRP groups in the second polarization reference direction are different, reference amplitudes of a plurality of TRPs included in each TRP group in the first polarization direction are the same or different, and reference amplitudes of the plurality of TRPs included in each TRP group in the second polarization direction are the same or different。

Third case: the reference amplitudes of the at least two of the plurality of TRP groups in the first polarization direction are different, the reference amplitudes of the plurality of TRP groups in the second polarization reference direction are the same, and the reference amplitudes of the plurality of TRPs included in each TRP group in the first polarization direction are the same or different.

Fourth case: the reference amplitudes of the plurality of TRP groups in the first polarization direction are the same, the reference amplitudes of the at least two of the plurality of TRP groups in the second polarization reference direction are different, and the reference amplitudes of the plurality of TRPs included in each TRP group in the second polarization direction are the same or different.

In addition, the above embodiment illustrates that the terminal can perform differential quantization on the second normalization coefficient and can quantize the normalization amplitude. In another embodiment, the terminal will also send third indication information to the network device, and the third indication information is further configured to indicate that at least one of the largest reference amplitude, the strongest coefficient or the largest normalization amplitude is not to be quantized and reported.

In some embodiments, when the third indication information is configured to indicate at least two of the largest reference amplitude, the strongest coefficient, or the largest normalization amplitude, one piece of third indication information can be used to both indicate the largest reference amplitude and the strongest coefficient, or the third indication information can be used to indicate at least two of the largest reference amplitude, the strongest coefficient, or the largest normalization amplitude, respectively.

It should be noted that a size of the third indication information for indicating the largest reference amplitude, a size of the third indication information for indicating the strongest coefficient, and a size of the third indication information for indicating the largest normalization amplitude are different. It can also be understood that the third indication information for indicating the largest reference amplitude, the third indication information for indicating the strongest coefficient, and the third indication information for indicating the largest normalization amplitude are different information.

In some embodiments, the third indication information may use the bitmap information or the combination number to indicate that at least one of the largest reference amplitude, the strongest coefficient or the largest normalization amplitude is not quantized and reported.

In some embodiments, the third indication information is the bitmap information, and each bit in the bitmap information is configured to indicate a position of at least one of the largest reference amplitude, the strongest coefficient or the largest normalization amplitude of a TRP group corresponding to the bit.

In some embodiments, the codebook parameters corresponding to each TRP group are the same, and N bits of bitmap information are used to indicate the position of the largest reference amplitude. N is the number of TRP groups. $N*2L_n*M_n$ bits or $N*K_n$ bits are used to indicate the position of the strongest coefficient.

In some embodiments, the third indication information is the combination number, and the combination number indicates a position of at least one of the largest reference amplitude, the strongest coefficient or the largest normalization amplitude of each TRP group.

For example, the combination number uses $\lceil \log_2^N \rceil$ bits to indicate the largest reference amplitude. N is the number of TRP groups. For another example, the combination number uses $\lceil \log_2^{2*Ln} \rceil$ or $\lceil \log_2^{K_0} \rceil$ or $\lceil \log_2^{2*Ln*Mn} \rceil$ or $\lceil \log_2^{N2*K_n} \rceil$ to indicate the position of the strongest coefficient. N is the number of TRPs used for CJT, $K_0$ represents the number of non-zero coefficients corresponding to one TRP, $L_n$ is the number of SD basis vectors or the number of ports of the n-th TRP group, and $K_n$ is the number of pairs of SD and FD basis vectors of the n-th TRP. $M_n$ is the number of FD basis vectors of the n-th TRP.

For another example, the g-th TRP group contains $N_g$ TRPs, the strongest coefficient is indicated through $\lceil \log_2^{2*Ln*N_g} \rceil$ or $\lceil \log_2^{N_g*2*Ln*Mn} \rceil$ or $\lceil \log_2^{K_{0,tot,g}} \rceil$, and $K_{0,tot,g}$ represents the number of non-zero coefficients contained in the g-th TRP group. In this case, the largest reference amplitude does not need to be quantified and reported.

The largest normalization amplitude is indicated by N bits or by $\lceil \log_2^N \rceil$, or the largest normalization amplitude corresponding to the n-th TRP group is configured by the network device. In this case, the largest normalization amplitude does not need to be quantized and reported. Alternatively, the largest normalization amplitude corresponding to the n-th TRP group is stipulated by the communication protocol.

For example, one TRP group includes one TRP, and the present disclosure involves two TRPs serving one terminal through CJT, and the first codebook structure in the above embodiment is used between the terminal and the network device to calculate the precoding of data transmission, and the two TRPs have different reference amplitudes in the first polarization direction, and the two TRPs have different reference amplitudes in the second polarization reference direction. The network device configures for the terminal that the number M of FD basis vectors corresponding to the two TRPs is 4, and the number of SD basis vectors corresponding to each TRP is $L_n = 2$.

First, the two TRPs are normalized respectively to obtain:

$$\widetilde{\widetilde{W}}_2 = \begin{bmatrix} s_0 W_{2,1} \\ s_1 W_{2,2} \end{bmatrix}$$

where

$$W_{2,1} = \begin{bmatrix} r_0 d_{1,1}^{0,1} & r_0 d_{1,2}^{0,1} & r_0 d_{1,3}^{0,1} & r_0 d_{1,4}^{0,1} \\ r_0 d_{2,1}^{0,1} & r_0 d_{2,2}^{0,1} & r_0 d_{2,3}^{0,1} & r_0 d_{2,4}^{0,1} \\ r_1 d_{3,1}^{1,1} & r_1 d_{3,2}^{1,1} & r_1 d_{3,3}^{1,1} & r_1 d_{3,4}^{1,1} \\ r_1 d_{4,1}^{1,1} & r_1 d_{4,2}^{1,1} & r_1 d_{4,3}^{1,1} & r_1 d_{4,4}^{1,1} \end{bmatrix}$$

$$W_{2,2} = \begin{bmatrix} r_2 d_{1,1}^{0,2} & r_2 d_{1,2}^{0,2} & r_2 d_{1,3}^{0,2} & r_2 d_{1,4}^{0,2} \\ r_2 d_{2,1}^{0,2} & r_2 d_{2,2}^{0,2} & r_2 d_{2,3}^{0,2} & r_2 d_{2,4}^{0,2} \\ r_3 d_{3,1}^{1,2} & r_3 d_{3,2}^{1,2} & r_3 d_{3,3}^{1,2} & r_3 d_{3,4}^{1,2} \\ r_3 d_{4,1}^{1,2} & r_3 d_{4,2}^{1,2} & r_3 d_{4,3}^{1,2} & r_3 d_{4,4}^{1,2} \end{bmatrix}$$

$W_{2,1}$ and $W_{2,2}$ represent combination coefficient matrices corresponding to the first TRP and the second TRP after differential operation, respectively. $r_0$ and $r_1$ represent reference amplitudes of the first TRP in the first polarization direction and the second polarization direction, respectively, $r_2$ and $r_3$ represent reference amplitudes of the second TRP in the first polarization direction and the second polarization direction, respectively. $d_{l,m}^{p,n}$ represents a differential coefficient in the *l*-th row and *m*-th column in a combination coefficient matrix in the p-th polarization direction corresponding to the n-th TRP. $s_0$ and $s_1$ are target amplitudes corresponding to the first TRP and the second TRP, respectively. Assuming that the strongest coefficients of the two combination coefficients are both in the first polarization direction, then $r_0 = 1$ and $r_2 = 1$, that is, these two reference amplitudes do not need to be reported, and $r_1$ and $r_3$ are quantized by a=4 bits, and the non-zero differential coefficient $d_{l,m}^{p,n}$ includes a differential amplitude and a differential phase. The differential amplitude and the differential phase are quantized and reported by b=3 bits and c=4 bits, respectively.

Then $s_0$ and $s_1$ in $\widetilde{\widetilde{W}}_2$ are normalized. Assuming that $s_0 > s_1$, then $\widetilde{\widetilde{W}}'_2 = \begin{bmatrix} t_0 W_{2,1} \\ t_1 W_{2,2} \end{bmatrix}$, where $t_0 = 1$ and $t_1 = \dfrac{s_1}{s_0}$ represent the normalization amplitudes corresponding to the two TRPs. The largest normalization amplitude $t_0$ does not need to be quantized and reported, but $t_1$ is quantized and reported through $d = 4$bits, and $\lceil \log_2^N \rceil$ bits are used to indicate which TRP corresponds to the maximum amplitude.

It should be noted that in the above embodiments, after it is determined that $\widetilde{\widetilde{W}}'_2 = \begin{bmatrix} t_0 W_{2,1} \\ t_1 W_{2,2} \end{bmatrix}$, the reporting is directly performed, while in some other embodiments, after it is determined that $\widetilde{\widetilde{W}}'_2 = \begin{bmatrix} t_0 W_{2,1} \\ t_1 W_{2,2} \end{bmatrix}$, where $t_0 = 1$ and $t_1 = \dfrac{s_1}{s_0}$ represent the normalization amplitudes corresponding to the two TRPs, it is also needed to further determine:

$$\widetilde{\widetilde{W}}''_2 = \begin{bmatrix} W'_{2,1} \\ W'_{2,2} \end{bmatrix}$$

$$W'_{2,1} = \begin{bmatrix} e_0 d^{0,1}_{1,1} & e_0 d^{0,1}_{1,2} & e_0 d^{0,1}_{1,3} & e_0 d^{0,1}_{1,4} \\ e_0 d^{0,1}_{2,1} & e_0 d^{0,1}_{2,2} & e_0 d^{0,1}_{2,3} & e_0 d^{0,1}_{2,4} \\ e_1 d^{1,1}_{3,1} & e_1 d^{1,1}_{3,2} & e_1 d^{1,1}_{3,3} & e_1 d^{1,1}_{3,4} \\ e_1 d^{1,1}_{4,1} & e_1 d^{1,1}_{4,2} & e_1 d^{1,1}_{4,3} & e_1 d^{1,1}_{4,4} \end{bmatrix}$$

$$W'_{2,2} = \begin{bmatrix} e_2 d^{0,2}_{1,1} & e_2 d^{0,2}_{1,2} & e_2 d^{0,2}_{1,3} & e_2 d^{0,2}_{1,4} \\ e_2 d^{0,2}_{2,1} & e_2 d^{0,2}_{2,2} & e_2 d^{0,2}_{2,3} & e_2 d^{0,2}_{2,4} \\ e_3 d^{1,2}_{3,1} & e_3 d^{1,2}_{3,2} & e_3 d^{1,2}_{3,3} & e_3 d^{1,2}_{3,4} \\ e_3 d^{1,2}_{4,1} & e_3 d^{1,2}_{4,2} & e_3 d^{1,2}_{4,3} & e_3 d^{1,2}_{4,4} \end{bmatrix}$$

where, $e_0 = t_0 * r_0$, $e_1 = t_0 * r_1$, $e_2 = t_1 * r_2$, $e_3 = t_1 * r_3$, and $e_0$, $e_1$, $e_2$ and $e_3$ are quantized through 4 bits, respectively.

In embodiments of the present disclosure, the combination coefficient is reported to the network device in a plurality of quantization modes, which expands a manner in which the terminal reports the position of the non-zero coefficient among the combination coefficients, and is used for the network device to obtain non-zero coefficient position information corresponding to the plurality of TRPs, thereby ensuring reliability of communication between the terminal and the network device. In addition, the diversity of the mode of the terminal reporting the combination coefficient is expanded.

It should be noted that the above-mentioned embodiments can be split into new embodiments, or combined with other embodiments to form new embodiments. The present disclosure does not limit the combination between the embodiments.

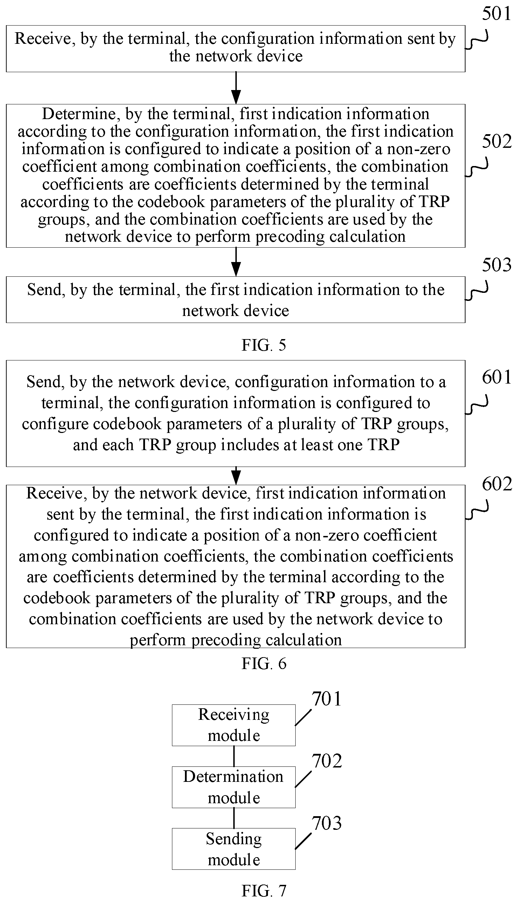

FIG. 5 shows a flowchart of a method for indicating a coefficient provided by an embodiment of the present disclosure, which can be exemplarily applied to the terminal shown in FIG. 2. The method includes at least part of the following contents.

In step 501, the terminal receives configuration information sent by the network device.

In embodiments of the present disclosure, the network device configures for the terminal the codebook parameters of the plurality of TRP groups, so that the terminal can determine a codebook parameter corresponding to a TRP group used for communication.

Each TRP group includes the at least one TRP. That is, the number of TRPs included in a TRP group includes two cases: one case is that the TRP group includes one TRP, and the other case is that the TRP group includes a plurality of TRPs.

In some embodiments, if a TRP group includes one TRP, that is, one TRP is called a TRP group. In a case where the TRP group includes one TRP, the TRP group may also be called a TRP, which is not limited in embodiments of the present disclosure.

In some embodiments, the codebook parameter includes at least one of the number of SD basis vectors, the number of ports, the number of FD basis vectors, and the number of pairs of SD basis vectors and FD basis vectors.

In step 502, the terminal determines first indication information according to the configuration information, the first indication information is configured to indicate a position of a non-zero coefficient among combination coefficients, the combination coefficients are coefficients determined by the terminal according to the codebook parameters of the plurality of TRP groups, and the combination coefficients are used by the network device to perform precoding calculation.

In embodiments of the present disclosure, after the terminal determines the codebook parameters based on the configuration information sent by the network device, it can determine, according to the configured codebook parameters, the first indication information for indicating the position of the non-zero coefficient among the combination coefficients.

The combination coefficients sent by the terminal are coefficients determined for the plurality of TRP groups, and the network device can perform precoding calculations based on the combination coefficients and the codebook structure.

In step 503, the terminal sends the first indication information to the network device.

In an embodiment of the present disclosure, the terminal indicates, through the first indication information, the combination coefficients corresponding to the plurality of TRP groups and after the network device receives the first indication information sent by the terminal, it can determine the combination coefficient generated by the terminal for each TRP group.

The present disclosure provides a solution that supports the indication of the position of the non-zero coefficient among the combination coefficients of the plurality of TRPs. The terminal determines, according to the codebook parameters of the plurality of TRPs, the position of the non-zero coefficient among the combination coefficients of the plurality of TRPs, which expands a manner in which the terminal reports the position of the non-zero coefficient among the combination coefficients, and is used for the network device to obtain non-zero coefficient position information corresponding to the plurality of TRPs, thereby ensuring reliability of communication between the terminal and the network device.

The following is an explanation of an indication manner for the first indication information that can be adopted by the terminal.

In some embodiments, the first indication information is bitmap information, and each bit in the bitmap information is configured to indicate whether a coefficient corresponding to the bit is a non-zero coefficient.

In an embodiment of the present disclosure, the bitmap information includes a plurality of bits, and each bit indicates whether the combination coefficient at the corresponding position is the non-zero coefficient.

In some embodiments, the bitmap information is represented by a bitmap. Alternatively, the bitmap information is represented by other manners.

For example, when a bit is 0, it indicates that a combination coefficient corresponding to the bit is the non-zero coefficient, and when the bit is 1, it indicates that the combination coefficient corresponding to the bit is not the non-zero coefficient. For another example, when the bit is 1, it indicates that the combination coefficient corresponding to the bit is the non-zero coefficient, and when the bit is 0, it indicates that the combination coefficient corresponding to the bit is not the non-zero coefficient.

It should be noted that a size of the first indication information in embodiments of the present disclosure is determined according to the codebook parameters.

In some embodiments, the terminal may determine the size of the first indication information based on the number of SD basis vectors or the number of ports and the number of FD basis vectors, or determine the size of the first indication information based on the number of pairs of SD and FD basis vectors, or determine the size of the first indication information in other ways, which is not limited in embodiments of the present disclosure.

In some embodiments, when the codebook parameters of the plurality of TRP groups are the same, one piece of bitmap information is determined according to the configuration information, and the bitmap information indicates the position of the non-zero coefficient among the combination coefficients corresponding to the plurality of TRP groups.

In an embodiment of the present disclosure, the codebook parameters of the plurality of TRP groups configured by the network device for the terminal are the same, that is, the codebook parameter corresponding to each TRP is the same. In this case, one piece of bitmap information can be configured, and the position of the non-zero coefficient among the combination coefficients corresponding to the plurality of TRP groups can be indicated by this bitmap information.

For example, one piece of bitmap information with $N*2L_n*M_n$ bits is used for indication, or one piece of bitmap information with $N*Kn$ bits is used for indication, where N is the number of TRP groups used for CJT, Ln is the number of SD basis vectors or the number of ports of the n-th TRP group, Mn is the number of FD basis vectors of the n-th TRP group, and Kn is the number of pairs of SD and FD basis vectors of the n-th TRP group.

In some embodiments, when codebook parameters of at least two TRP groups among the plurality of TRP groups are different, a plurality of pieces of bitmap information are determined according to the configuration information, and each piece of bitmap information indicates a position of a non-zero coefficient among a combination coefficient corresponding to at least one TRP group.

In an embodiment of the present disclosure, when the codebook parameters of the at least two TRP groups among the plurality of TRP groups configured by the network device for the terminal are different, that is, there are at least two TRPs with different codebook parameters. In this case, the plurality of pieces of bitmap information can be configured, and positions of non-zero coefficients among combination coefficients corresponding to different TRP groups with different codebook parameters are respectively indicated through the plurality of pieces of bitmap information.

For example, S pieces of bitmap information are used for indication, $S \leq N$, N is the number of TRP groups used for CJT, a size of the bitmap information is $2L_n * M_n$ or $K_n$ bits, or $X*2L_n*M_n$ or $X*K_n$ bits, where X represents that the number of SD basis vectors or the number of ports, the number of FD basis vectors, and the number of pairs of SD and FD basis vectors corresponding to X TRP groups are the same, N is the number of TRP groups used for CJT, $L_n$ is the number of SD basis vectors or the number of ports of the n-th TRP group, $M_n$ is the number of FD basis vectors of the n-th TRP group, and $K_n$ is the number of pairs of SD and FD basis vectors of the n-th TRP group.

In some other embodiments, the first indication information is a combination number, and the combination number has a mapping relationship with the position of the non-zero coefficient.

In embodiments of the present disclosure, the combination number has the mapping relationship with the position of the non-zero coefficient, that is, one combination number corresponds to positions of a group of non-zero coefficients. After the terminal determines the non-zero coefficient among the combination coefficient, it can determine the corresponding combination number according to the position of the non-zero coefficient and the mapping relationship, and then send the first indication information to the network device through the first indication information.

In some embodiments, when the codebook parameters of the plurality of TRP groups are the same, one combination number is determined according to the configuration information, and indication information corresponding to the combination number indicates the positions of the non-zero coefficients among the combination coefficients corresponding to the plurality of TRP groups.

In an embodiment of the present disclosure, the codebook parameters of the plurality of TRP groups configured by the network device for the terminal are the same, that is, the codebook parameter corresponding to each TRP is the same. In this case, one combination number can be configured, which can indicate the positions of the non-zero coefficients among the combination coefficients corresponding to the plurality of TRP groups.

It should be noted that the size of the first indication information in embodiments of the present disclosure is determined according to the codebook parameters.

In some embodiments, the terminal may determine the size of the first indication information based on the number of SD basis vectors or the number of ports and the number of FD basis vectors, or determine the size of the first indication information based on the number of pairs of SD and FD basis vectors, or determine the size of the first indication information in other ways, which is not limited in embodiments of the present disclosure. $\left\lceil \log_2 C_{NK_n}^{K_{0,tot}} \right\rceil$ or $\left\lceil \log_2 C_{NK_n-Y}^{K_{0,tot}-Y} \right\rceil$ bits are used for indication, that is, the combination number indicates the position of the non-zero coefficient, where N is the number of TRP groups used for CJT, $K_{0,tot}$ represents the number of non-zero coefficients corresponding to all TRPs, Y represents the number of strongest coefficients corresponding to N TRP groups, and $K_n$ is the number of pairs of SD and FD basis vectors of the n-th TRP group.

In some embodiments, when codebook parameters of at least two TRP groups among the plurality of TRP groups are different, a plurality of combination numbers are determined according to the configuration information, and each combination number corresponds to a position of a non-zero coefficient among a combination coefficient corresponding to at least one TRP group.

In an embodiment of the present disclosure, when the codebook parameters of the at least two TRP groups among the plurality of TRP groups configured by the network device for the terminal are different, that is, there are at least two TRPs with different codebook parameters. In this case, the plurality of combination numbers can be configured, and positions of non-zero coefficients among combination coefficients corresponding to different TRP groups with different codebook parameters are respectively indicated by the plurality of combination numbers.

For example, S combination numbers are used for indication, $S \leq N$, and the indication overhead of each combination number is $\left\lceil \log_2 C_{K_n}^{K_{0,n}} \right\rceil + \left\lceil \log_2 K_{0,n} \right\rceil$ bits or $\left\lceil \log_2 C_{XK_n}^{Z} \right\rceil + \left\lceil \log_2 Z \right\rceil$ bits, where N is the number of TRP groups used for CJT, Z represents combination coefficients corresponding to X TRP groups, and the number of SD basis vectors or the number of ports, the number of FD basis vectors, and the number of pairs of SD and FD basis vectors corresponding to the X TRP groups are the same. $K_{0,n}$ represents the number of non-zero coefficients corresponding to the n-th TRP group, and $K_n$ is the number of pairs of SD and FD basis vectors of the n-th TRP group.

In the solution provided by embodiments of the present disclosure, the terminal can indicate the positions of the non-zero coefficients among the combination coefficients corresponding to the plurality of TRP groups through different first indication information, thereby expanding the diversity of indicating the non-zero coefficient through the first indication information.

In some embodiments, the terminal quantizes the combination coefficients of the plurality of TRP groups to obtain the quantized first quantization coefficients, and the terminal sends the first quantization coefficients to the network device.

In embodiments of the present disclosure, after the terminal determines the combination coefficients of the plurality of TRP groups, it can quantizes the determined combination coefficients of the plurality of TRP groups to obtain the quantized first quantization coefficients. It can also be understood that the terminal quantizing the combination coefficients of the plurality of TRP groups means that the combination coefficients are expressed in other ways to facilitate the terminal to report the combination coefficients to the network device, that is, the terminal sends the first quantization coefficients to the network device, and the network device receives the first quantization coefficients sent by the terminal.

**Quantization manner 1:** the terminal normalizes the combination coefficients corresponding to the plurality of TRP groups to obtain the normalized first normalization coefficients, and then differentially quantizes the obtained first normalization coefficients according to a polarization direction to obtain the first quantization coefficients.

Normalizing the combination coefficients corresponding to the plurality of TRP groups refers to selecting the largest combination coefficient from the combination coefficients corresponding to the plurality of TRP groups, and obtaining a value by dividing each combination coefficient by the largest combination coefficient to form the first normalization coefficient.

Differential quantization means that for a combination coefficient, a reference amplitude and a differential coefficient are used to jointly indicate the combination coefficient, and the reference amplitude and the differential coefficient are quantized.

In embodiments of the present disclosure, the terminal normalizes the combination coefficients corresponding to the plurality of TRP groups to obtain the normalized first normalization coefficients, and then uses the reference amplitudes and the differential coefficients to jointly indicate the first normalization coefficients, thereby obtaining the first quantization coefficients after quantizing the first normalization coefficients. It can also be understood that the terminal normalizes the combination corresponding to all TRPs in the plurality of TRP groups to obtain the normalized first normalization coefficients.

In some embodiments, normalizing the combination coefficients corresponding to the plurality of TRP groups refers to determining the largest combination coefficient among the combination coefficients corresponding to the plurality of TRP groups, and dividing each combination coefficient corresponding to the plurality of TRP groups by the largest combination coefficient to obtain the first normalization coefficient.

In some embodiments, the polarization direction includes a first polarization direction and a second polarization direction. Differentially quantizing, by the terminal, the first normalization coefficient according to the polarization direction to obtain the first quantization coefficient includes: the terminal determines, according to the first normalization coefficient, a reference amplitude and the corresponding differential coefficient of each TRP group in the first polarization direction and a reference amplitude and the corresponding differential coefficient of each TRP group in the second polarization direction and quantizes the reference amplitude and the corresponding differential coefficient of each TRP group in the first polarization direction and the reference amplitude and the corresponding differential coefficient of each TRP group in the second polarization direction to obtain the first quantization coefficient.

It should be noted that in embodiments of the present disclosure, the reference amplitude of the TRP group in the first polarization direction and the reference amplitude of the TRP group in the second polarization direction include a plurality of cases.

First case: reference amplitudes of the plurality of TRP groups in the first polarization direction are the same, and reference amplitudes of the plurality of TRP groups in the second polarization reference direction are the same.

Second case: reference amplitudes of at least two of the plurality of TRP groups in the first polarization direction are different, reference amplitudes of the at least two of the plurality of TRP groups in the second polarization reference direction are different, reference amplitudes of a plurality of TRPs included in each TRP group in the first polarization direction are the same or different, and reference amplitudes of the plurality of TRPs included in each TRP group in the second polarization direction are the same or different。

Third case: the reference amplitudes of the at least two of the plurality of TRP groups in the first polarization direction are different, the reference amplitudes of the plurality of TRP groups in the second polarization reference direction are the same, and the reference amplitudes of the plurality of TRPs included in each TRP group in the first polarization direction are the same or different.

Fourth case: the reference amplitudes of the plurality of TRP groups in the first polarization direction are the same, the reference amplitudes of the at least two of the plurality of TRP groups in the second polarization reference direction are different, and the reference amplitudes of the plurality of TRPs included in each TRP group in the second polarization direction are the same or different.

In addition, the above embodiment illustrates that the terminal can perform differential quantization on the first normalization coefficient, and in another embodiment, the terminal will also send second indication information to the network device, and the second indication information is configured to indicate that at least one of the largest reference amplitude or the strongest coefficient is not to be quantized and reported, and the network device will receive the second indication information sent by the terminal.

The largest reference amplitude is the maximum reference amplitude among the reference amplitudes included in the first quantization coefficients, and the strongest coefficient is a coefficient with the strongest differential coefficient among the first quantization coefficients.

In some embodiments, when the second indication information is configured to indicate the largest reference amplitude and the strongest coefficient, one piece of second indication information can be used to indicate both the largest reference amplitude and the strongest coefficient, or two pieces of second indication information can be used to respectively indicate the largest reference amplitude and the strongest coefficient.

It should be noted that a size of the second indication information for indicating the largest reference amplitude is different from a size of the second indication information for indicating the strongest coefficient. It can also be understood that the second indication information for indicating the largest reference amplitude and the second indication information for indicating the strongest coefficient are two pieces of different information.

In some embodiments, the second indication information may use the bitmap information or the combination number to indicate that at least one of the largest reference amplitude or the strongest coefficient is not to be quantized and reported.

In some embodiments, the second indication information is the bitmap information, and each bit in the bitmap information is configured to indicate a position of at least one of the largest reference amplitude or the strongest coefficient of a TRP group corresponding to the bit.

In some embodiments, the codebook parameters corresponding to each TRP group are the same, and N bits of bitmap information are used to indicate the position of the largest reference amplitude. N is the number of TRP groups used for CJT. $N*2L_n*M_n$ bits or $N*K_n$ bits are used to indicate the position of the strongest coefficient.

In some embodiments, the second indication information is the combination number, and the combination number is configured to indicate a position of at least one of the largest reference amplitude or the strongest coefficient of each TRP group.

For example, the combination number uses $\lceil \log_2^N \rceil$ bits to indicate the largest reference amplitude. N is the number of TRP groups. Alternatively, the combination number uses $\lceil \log_2^{2*L_n*N} \rceil$ or $\lceil \log_2^{K_{0,tot}} \rceil$ or $\lceil \log_2^{N*2*L_n*M_n} \rceil$ or $\lceil \log_2^{N*2*K_n} \rceil$ to indicate the position of the strongest coefficient. N is the number of TRP groups used for CJT, $K_{0,tot}$ represents the number of non-zero coefficients corresponding to all TRP groups, $K_n$ is the number of pairs of SD and FD basis vectors of the n-th TRP group. $M_n$ is the number of FD basis vectors of the n-th TRP group.

The differential quantization involved in the present disclosure is explained below by way of example.

For example, if a TRP group includes one TRP, then the present disclosure involves two TRPs serving one terminal through CJT, and the third codebook structure in the above embodiment is used between the terminal and the network device to calculate the precoding of data transmission, and the reference amplitudes of the plurality of TRP groups in the first polarization direction are the same, and the reference amplitudes of the plurality of TRP groups in the second polarization reference direction are the same. The network device configures for the terminal that the number M of FD basis vectors corresponding to two TRPs is 4, and the number of SD basis vectors corresponding to each TRP is $L_n = 2$. The terminal uses a codebook calculation method according to the downlink channel from the two TRPs to the terminal to obtain a combination coefficient matrix corresponding to the two TRPs:

$$
\widetilde{W}_2 = \begin{bmatrix}
c_{1,1}^{0,1} & c_{1,2}^{0,1} & c_{1,3}^{0,1} & c_{1,4}^{0,1} \\
c_{2,1}^{0,1} & c_{2,2}^{0,1} & c_{2,3}^{0,1} & c_{2,4}^{0,1} \\
c_{3,1}^{1,1} & c_{3,2}^{1,1} & c_{3,3}^{1,1} & c_{3,4}^{1,1} \\
c_{4,1}^{1,1} & c_{4,2}^{1,1} & c_{4,3}^{1,1} & c_{4,4}^{1,1} \\
c_{1,1}^{0,2} & c_{1,2}^{0,2} & c_{1,3}^{0,2} & c_{1,4}^{0,2} \\
c_{2,1}^{0,2} & c_{2,2}^{0,2} & c_{2,3}^{0,2} & c_{2,4}^{0,2} \\
c_{3,1}^{1,2} & c_{3,2}^{1,2} & c_{3,3}^{1,2} & c_{3,4}^{1,2} \\
c_{4,1}^{1,2} & c_{4,2}^{1,2} & c_{4,3}^{1,2} & c_{4,4}^{1,2}
\end{bmatrix}
$$

where, $c_{l,m}^{p,n}$ represents a combination coefficient in the $l$-th row and $m$-th column in a combination coefficient matrix in the p-th polarization direction corresponding to the n-th TRP. First, each coefficient in $\tilde{W}_2$ is normalized, and the normalized coefficient is differentially expressed in the following manner:

$$
\widetilde{\widetilde{W}}_2 = \begin{bmatrix}
r_0 d_{1,1}^{0,1} & r_0 d_{1,2}^{0,1} & r_0 d_{1,3}^{0,1} & r_0 d_{1,4}^{0,1} \\
r_0 d_{2,1}^{0,1} & r_0 d_{2,2}^{0,1} & r_0 d_{2,3}^{0,1} & r_0 d_{2,4}^{0,1} \\
r_1 d_{3,1}^{1,1} & r_1 d_{3,2}^{1,1} & r_1 d_{3,3}^{1,1} & r_1 d_{3,4}^{1,1} \\
r_1 d_{4,1}^{1,1} & r_1 d_{4,2}^{1,1} & r_1 d_{4,3}^{1,1} & r_1 d_{4,4}^{1,1} \\
r_0 d_{1,1}^{0,2} & r_0 d_{1,2}^{0,2} & r_0 d_{1,3}^{0,2} & r_0 d_{1,4}^{0,2} \\
r_0 d_{2,1}^{0,2} & r_0 d_{2,2}^{0,2} & r_0 d_{2,3}^{0,2} & r_0 d_{2,4}^{0,2} \\
r_1 d_{3,1}^{1,2} & r_1 d_{3,2}^{1,2} & r_1 d_{3,3}^{1,2} & r_1 d_{3,4}^{1,2} \\
r_1 d_{4,1}^{1,2} & r_1 d_{4,2}^{1,2} & r_1 d_{4,3}^{1,2} & r_1 d_{4,4}^{1,2}
\end{bmatrix}
$$

where $r_0$ and $r_1$ represent reference amplitudes of the two TRPs in the first polarization direction and the second polarization direction, respectively, and $d_{l,m}^{p,n}$ represents a differential coefficient in the $l$-th row and $m$-th column in a combination coefficient matrix in the p-th polarization direction corresponding to the n-th TRP.

Assuming that the strongest coefficient in the above equation is located in the first polarization direction of the first TRP, the reference amplitude in the above equation $r_0 = 1$, and the reference amplitude is not reported.

For another example, the reference amplitudes of the two TRPs in the first polarization direction are different, and the reference amplitudes of the two TRPs in the second polarization reference direction are different, then the matrix obtained by normalization is the same as the above example, and the normalized coefficient is differentially expressed in the following manner:

$$
\widetilde{\widetilde{W}}_2' = \begin{bmatrix}
r_0 d_{1,1}^{0,1} & r_0 d_{1,2}^{0,1} & r_0 d_{1,3}^{0,1} & r_0 d_{1,4}^{0,1} \\
r_0 d_{2,1}^{0,1} & r_0 d_{2,2}^{0,1} & r_0 d_{2,3}^{0,1} & r_0 d_{2,4}^{0,1} \\
r_1 d_{3,1}^{1,1} & r_1 d_{3,2}^{1,1} & r_1 d_{3,3}^{1,1} & r_1 d_{3,4}^{1,1} \\
r_1 d_{4,1}^{1,1} & r_1 d_{4,2}^{1,1} & r_1 d_{4,3}^{1,1} & r_1 d_{4,4}^{1,1} \\
r_2 d_{1,1}^{0,2} & r_2 d_{1,2}^{0,2} & r_2 d_{1,3}^{0,2} & r_2 d_{1,4}^{0,2} \\
r_2 d_{2,1}^{0,2} & r_2 d_{2,2}^{0,2} & r_2 d_{2,3}^{0,2} & r_2 d_{2,4}^{0,2} \\
r_3 d_{3,1}^{1,2} & r_3 d_{3,2}^{1,2} & r_3 d_{3,3}^{1,2} & r_3 d_{3,4}^{1,2} \\
r_3 d_{4,1}^{1,2} & r_3 d_{4,2}^{1,2} & r_3 d_{4,3}^{1,2} & r_3 d_{4,4}^{1,2}
\end{bmatrix}
$$

where $r_0$ and $r_1$ represent reference amplitudes of the first TRP in the first polarization direction and the second polarization direction, respectively, $r_2$ and $r_3$ represent reference amplitudes of the second TRP in the first polarization direction and the second polarization direction, respectively. $\mathrm{d}_{l,m}^{p,n}$ represents a differential coefficient in the *l*-th row and *m*-th column in a combination coefficient matrix in the p-th polarization direction corresponding to the n-th TRP.

Still assuming that the strongest coefficient in the above equation is located in the first polarization direction of the first TRP, then $r_0 = 1$, this reference amplitude is not reported, other reference amplitudes $r_1$, $r_2$ and $r_3$ are quantized and reported through a=4 bits, and the non-zero differential coefficient $\mathrm{d}_{l,m}^{p,n}$ includes a differential amplitude and a differential phase. The differential amplitude and the differential phase are quantized and reported through b=3 bits and c=4 bits, respectively.

**Quantization manner** 2: the terminal normalizes the combination coefficient corresponding to each of the plurality of TRP groups to obtain a second normalization coefficient and a normalization amplitude corresponding to each TRP group, quantizes the normalization amplitude, and differentially quantizes, according to the polarization direction, the second normalization coefficient corresponding to each TRP group to obtain the quantized first quantization coefficient.

Normalizing the combination coefficient corresponding to each of the plurality of TRP groups means extracting one normalization amplitude for a combination coefficient corresponding to each TRP group, and then obtaining a value by dividing the combination coefficient corresponding to each TRP group by the corresponding normalization amplitude to constitute the second normalization coefficient.

In some embodiments, the normalization amplitude is obtained by extracting one target amplitude for the combination coefficient corresponding to each TRP group, where the target amplitude is the maximum amplitude included in the combination coefficient corresponding to each TRP group, and then selecting the largest target amplitude from target amplitudes corresponding to the plurality of TRP groups, and dividing the target amplitude corresponding to each TRP group by the largest target amplitude to obtain the normalization amplitude corresponding to each TRP group.

Differential quantization means that for a second normalization coefficient, the reference amplitude and the differential coefficient are used to jointly indicate the second normalization coefficient, and the reference amplitude and the differential coefficient are quantized.

In some embodiments, if each TRP group includes one TRP, it means that normalization is performed on one TRP, and subsequent processes are performed in sequence; and if each TRP group includes a plurality of TRPs, it means that normalization is performed on one TRP group consisting of a plurality of TRPs, and subsequent processes are performed in sequence.

Next, two solutions for obtaining the first quantization coefficient are described.

First solution: the polarization direction includes a first polarization direction and a second polarization direction, and quantizing, by the terminal, the normalization amplitude and differentially quantizing, according to the polarization direction, the second normalization coefficient corresponding to each TRP group to obtain the quantized first quantization coefficient include: determining, according to the second normalization coefficient, the reference amplitude and the corresponding differential coefficient of each TRP group in the first polarization direction and the reference amplitude and the corresponding differential coefficient of each TRP group in the second polarization direction; and quantizing the normalization amplitude, the reference amplitude and the corresponding differential coefficient of each TRP group in the first polarization direction and the reference amplitude and the corresponding differential coefficient of each TRP group in the second polarization direction to obtain the first quantization coefficient.

Second solution: the polarization direction includes a first polarization direction and a second polarization direction, and quantizing, by the terminal, the normalization amplitude and differentially quantizing, according to the polarization direction, the second normalization coefficient corresponding to each TRP group to obtain the quantized first quantization coefficient include: determining, according to the second normalization coefficient and the normalization amplitude, the reference amplitude and the corresponding differential coefficient of each TRP group in the first polarization direction and the reference amplitude and the corresponding differential coefficient of each TRP group in the second polarization direction; and quantizing the reference amplitude and the corresponding differential coefficient of each TRP group in the first polarization direction and the reference amplitude and the corresponding differential coefficient of each TRP group in the second polarization direction to obtain the first quantization coefficient, and the reference amplitude includes a product of an initial amplitude of the second normalization coefficient and the normalization amplitude.

The initial amplitude refers to an amplitude of each TRP group in the first polarization direction and an amplitude of each TRP group in the second polarization direction determined by the terminal according to the second normalization coefficient, that is, the reference amplitudes in the two polarization directions determined according to the second normalization coefficient in the above first solution.

It should be noted that in embodiments of the present disclosure, the reference amplitude of the TRP group in the first polarization direction and the reference amplitude of the TRP group in the second polarization direction include a plurality of cases.

First case: reference amplitudes of the plurality of TRP groups in the first polarization direction are the same, and reference amplitudes of the plurality of TRP groups in the second polarization reference direction are the same.

Second case: reference amplitudes of at least two of the plurality of TRP groups in the first polarization direction are different, reference amplitudes of the at least two of the plurality of TRP groups in the second polarization reference direction are different, reference amplitudes of a plurality of TRPs included in each TRP group in the first polarization direction are the same or different, and reference amplitudes of the plurality of TRPs included in each TRP group in the second polarization direction are the same or different。

Third case: the reference amplitudes of the at least two of the plurality of TRP groups in the first polarization direction are different, the reference amplitudes of the plurality of TRP groups in the second polarization reference direction are the same, and the reference amplitudes of the plurality of TRPs included in each TRP group in the first polarization direction are the same or different.

Fourth case: the reference amplitudes of the plurality of TRP groups in the first polarization direction are the same, the reference amplitudes of the at least two of the plurality of TRP groups in the second polarization reference direction are different, and the reference amplitudes of the plurality of TRPs included in each TRP group in the second polarization direction are the same or different.

In addition, the above embodiment illustrates that the terminal can perform differential quantization on the second normalization coefficient and can quantize the normalization amplitude. In another embodiment, the terminal will also send third indication information to the network device, and the third indication information is further configured to indicate that at least one of the largest reference amplitude, the strongest coefficient or the largest normalization amplitude is not to be quantized and reported.

In some embodiments, when the third indication information is configured to indicate at least two of the largest reference amplitude, the strongest coefficient, or the largest normalization amplitude, one piece of third indication information can be used to both indicate the largest reference amplitude and the strongest coefficient, or the third indication information can be used to indicate at least two of the largest reference amplitude, the strongest coefficient, or the largest normalization amplitude, respectively.

It should be noted that a size of the third indication information for indicating the largest reference amplitude, a size of the third indication information for indicating the strongest coefficient, and a size of the third indication information for indicating the largest normalization amplitude are different. It can also be understood that the third indication information for indicating the largest reference amplitude, the third indication information for indicating the strongest coefficient, and the third indication information for indicating the largest normalization amplitude are different information.

In some embodiments, the third indication information may use the bitmap information or the combination number to indicate that at least one of the largest reference amplitude, the strongest coefficient or the largest normalization amplitude is not quantized and reported.

In some embodiments, the third indication information is the bitmap information, and each bit in the bitmap information is configured to indicate a position of at least one of the largest reference amplitude, the strongest coefficient or the largest normalization amplitude of a TRP group corresponding to the bit.

In some embodiments, the codebook parameters corresponding to each TRP group are the same, and N bits of bitmap information are used to indicate the position of the largest reference amplitude. N is the number of TRP groups. $N*2L_n*M_n$ bits or $N*K_n$ bits are used to indicate the position of the strongest coefficient.

In some embodiments, the third indication information is the combination number, and the combination number indicates a position of at least one of the largest reference amplitude, the strongest coefficient or the largest normalization amplitude of each TRP group.

For example, the combination number uses $\lceil \log_2^N \rceil$ bits to indicate the largest reference amplitude. N is the number of TRP groups. For another example, the combination number uses $\lceil \log_2^{2*L_n} \rceil$ or $\lceil \log_2^{K_0} \rceil$ or $\lceil \log_2^{2*L_n*M_n} \rceil$ or $\lceil \log_2^{N2*K_n} \rceil$ to indicate the position of the strongest coefficient. N is the number of TRPs used for CJT, $K_0$ represents the number of non-zero coefficients corresponding to one TRP, $L_n$ is the number of SD basis vectors or the number of ports of the n-th TRP group, and $K_n$ is the number of pairs of SD and FD basis vectors of the n-th TRP. $M_n$ is the number of FD basis vectors of the n-th TRP.

For another example, the g-th TRP group contains $N_g$ TRPs, the strongest coefficient is indicated through $\lceil \log_2^{2*L_n*N_g} \rceil$ or $\lceil \log_2^{N_g*2*L_n*M_n} \rceil$ or $\lceil \log_2^{K_{0,tot,g}} \rceil$, and $K_{0,tot,g}$ represents the number of non-zero coefficients contained in the g-th TRP group. In this case, the largest reference amplitude does not need to be quantified and reported.

The largest normalization amplitude is indicated by N bits or by $\lceil \log_2^N \rceil$, or the largest normalization amplitude corresponding to the n-th TRP group is configured by the network device. In this case, the largest normalization amplitude does not need to be quantized and reported. Alternatively, the largest normalization amplitude corresponding to the n-th TRP group is stipulated by the communication protocol.

For example, one TRP group includes one TRP, and the present disclosure involves two TRPs serving one terminal through CJT, and the first codebook structure in the above embodiment is used between the terminal and the network device to calculate the precoding of data transmission, and the two TRPs have different reference amplitudes in the first polarization direction, and the two TRPs have different reference amplitudes in the second polarization reference direction. The network device configures for the terminal that the number M of FD basis vectors corresponding to the two TRPs is 4, and the number of SD basis vectors corresponding to each TRP is $L_n = 2$.

First, the two TRPs are normalized respectively to obtain:

$$\widetilde{\widetilde{W}}_2 = \begin{bmatrix} s_0 W_{2,1} \\ s_1 W_{2,2} \end{bmatrix}$$

where

$$W_{2,1} = \begin{bmatrix} r_0 d_{1,1}^{0,1} & r_0 d_{1,2}^{0,1} & r_0 d_{1,3}^{0,1} & r_0 d_{1,4}^{0,1} \\ r_0 d_{2,1}^{0,1} & r_0 d_{2,2}^{0,1} & r_0 d_{2,3}^{0,1} & r_0 d_{2,4}^{0,1} \\ r_1 d_{3,1}^{1,1} & r_1 d_{3,2}^{1,1} & r_1 d_{3,3}^{1,1} & r_1 d_{3,4}^{1,1} \\ r_1 d_{4,1}^{1,1} & r_1 d_{4,2}^{1,1} & r_1 d_{4,3}^{1,1} & r_1 d_{4,4}^{1,1} \end{bmatrix}$$

$$W_{2,2} = \begin{bmatrix} r_2 d_{1,1}^{0,2} & r_2 d_{1,2}^{0,2} & r_2 d_{1,3}^{0,2} & r_2 d_{1,4}^{0,2} \\ r_2 d_{2,1}^{0,2} & r_2 d_{2,2}^{0,2} & r_2 d_{2,3}^{0,2} & r_2 d_{2,4}^{0,2} \\ r_3 d_{3,1}^{1,2} & r_3 d_{3,2}^{1,2} & r_3 d_{3,3}^{1,2} & r_3 d_{3,4}^{1,2} \\ r_3 d_{4,1}^{1,2} & r_3 d_{4,2}^{1,2} & r_3 d_{4,3}^{1,2} & r_3 d_{4,4}^{1,2} \end{bmatrix}$$

$W_{2,1}$ and $W_{2,2}$ represent combination coefficient matrices corresponding to the first TRP and the second TRP after differential operation, respectively. $r_0$ and $r_1$ represent reference amplitudes of the first TRP in the first polarization direction and the second polarization direction, respectively, $r_2$ and $r_3$ represent reference amplitudes of the second TRP in the first polarization direction and the second polarization direction, respectively. $d_{l,m}^{p,n}$ represents a differential coefficient in the $l$-th row and $m$-th column in a combination coefficient matrix in the p-th polarization direction corresponding to the n-th TRP. $s_0$ and $s_1$ are target amplitudes corresponding to the first TRP and the second TRP, respectively. Assuming that the strongest coefficients of the two combination coefficients are both in the first polarization direction, then $r_0 = 1$ and $r_2 = 1$, that is, these two reference amplitudes do not need to be reported, and $r_1$ and $r_3$ are quantized by a=4 bits, and the non-zero differential coefficient $d_{l,m}^{p,n}$ includes a differential amplitude and a differential phase. The differential amplitude and the differential phase are quantized and reported by b=3 bits and c=4 bits, respectively.

Then $s_0$ and $s_1$ in $\widetilde{\widetilde{W}}_2$ are normalized. Assuming that $s_0 > s_1$, then $\widetilde{\widetilde{W}}'_2 = \begin{bmatrix} t_0 W_{2,1} \\ t_1 W_{2,2} \end{bmatrix}$, where $t_0 = 1$ and $t_1 = \frac{s_1}{s_0}$ represent the normalization amplitudes corresponding to the two TRPs. The largest normalization amplitude $t_0$ does not need to be quantized and reported, but $t_1$ is quantized and reported through d= 4bits, and $\lceil \log_2^N \rceil$ bits are used to indicate which TRP corresponds to the maximum amplitude.

It should be noted that in the above embodiments, after it is determined that $\widetilde{\widetilde{W}}'_2 = \begin{bmatrix} t_0 W_{2,1} \\ t_1 W_{2,2} \end{bmatrix}$, the reporting is directly performed, while in some other embodiments, after it is determined that $\widetilde{\widetilde{W}}'_2 = \begin{bmatrix} t_0 W_{2,1} \\ t_1 W_{2,2} \end{bmatrix}$, where $t_0 = 1$ and

$t_1 = \frac{s_1}{s_0}$ represent the normalization amplitudes corresponding to the two TRPs, it is also needed to further determine:

$$\widetilde{\widetilde{W}}''_2 = \begin{bmatrix} W'_{2,1} \\ W'_{2,2} \end{bmatrix}$$

$$W'_{2,1} = \begin{bmatrix} e_0 d^{0,1}_{1,1} & e_0 d^{0,1}_{1,2} & e_0 d^{0,1}_{1,3} & e_0 d^{0,1}_{1,4} \\ e_0 d^{0,1}_{2,1} & e_0 d^{0,1}_{2,2} & e_0 d^{0,1}_{2,3} & e_0 d^{0,1}_{2,4} \\ e_1 d^{1,1}_{3,1} & e_1 d^{1,1}_{3,2} & e_1 d^{1,1}_{3,3} & e_1 d^{1,1}_{3,4} \\ e_1 d^{1,1}_{4,1} & e_1 d^{1,1}_{4,2} & e_1 d^{1,1}_{4,3} & e_1 d^{1,1}_{4,4} \end{bmatrix}$$

$$W'_{2,2} = \begin{bmatrix} e_2 d^{0,2}_{1,1} & e_2 d^{0,2}_{1,2} & e_2 d^{0,2}_{1,3} & e_2 d^{0,2}_{1,4} \\ e_2 d^{0,2}_{2,1} & e_2 d^{0,2}_{2,2} & e_2 d^{0,2}_{2,3} & e_2 d^{0,2}_{2,4} \\ e_3 d^{1,2}_{3,1} & e_3 d^{1,2}_{3,2} & e_3 d^{1,2}_{3,3} & e_3 d^{1,2}_{3,4} \\ e_3 d^{1,2}_{4,1} & e_3 d^{1,2}_{4,2} & e_3 d^{1,2}_{4,3} & e_3 d^{1,2}_{4,4} \end{bmatrix}$$

where, $e_0 = t_0 * r_0$, $e_1 = t_0 * r_1$, $e_2 = t_1 * r_2$, $e_3 = t_1 * r_3$, and $e_0$, $e_1$, $e_2$ and $e_3$ are quantized through 4 bits, respectively.

In embodiments of the present disclosure, the combination coefficient is reported to the network device in a plurality of quantization modes, which expands a manner in which the terminal reports the position of the non-zero coefficient among the combination coefficients, and is used for the network device to obtain non-zero coefficient position information corresponding to the plurality of TRPs, thereby ensuring reliability of communication between the terminal and the network device. In addition, the diversity of the mode of the terminal reporting the combination coefficient is expanded.

FIG. 6 shows a flowchart of a method for indicating a coefficient provided by an embodiment of the present disclosure, which can be exemplarily applied to the network device shown in FIG. 2, and the method includes at least part of the following contents.

In step 601, the network device sends configuration information to a terminal, the configuration information is configured to configure codebook parameters of a plurality of TRP groups, and each TRP group includes at least one TRP.

In embodiments of the present disclosure, the network device configures for the terminal the codebook parameters of the plurality of TRP groups, so that the terminal can determine a codebook parameter corresponding to a TRP group used for communication.

Each TRP group includes the at least one TRP. That is, the number of TRPs included in a TRP group includes two cases: one case is that the TRP group includes one TRP, and the other case is that the TRP group includes a plurality of TRPs.

In some embodiments, if a TRP group includes one TRP, that is, one TRP is called a TRP group. In a case where the TRP group includes one TRP, the TRP group may also be called a TRP, which is not limited in embodiments of the present disclosure.

In some embodiments, the codebook parameter includes at least one of the number of SD basis vectors, the number of ports, the number of FD basis vectors, and the number of pairs of SD basis vectors and FD basis vectors.

In step 602, the network device receives first indication information sent by the terminal, the first indication information is configured to indicate a position of a non-zero coefficient among combination coefficients, the combination coefficients are coefficients determined by the terminal according to the codebook parameters of the plurality of TRP groups, and the combination coefficients are used by the network device to perform precoding calculation.

In an embodiment of the present disclosure, the terminal indicates, through the first indication information, the combination coefficients corresponding to the plurality of TRP groups and after the network device receives the first indication information sent by the terminal, it can determine the combination coefficient generated by the terminal for each TRP group.

The present disclosure provides a solution that supports the indication of the position of the non-zero coefficient among the combination coefficients of the plurality of TRPs. The terminal determines, according to the codebook parameters of the plurality of TRPs, the position of the non-zero coefficient among the combination coefficients of the plurality of TRPs, which expands a manner in which the terminal reports the position of the non-zero coefficient among the combination coefficients, and is used for the network device to obtain non-zero coefficient position information corresponding to the plurality of TRPs, thereby ensuring reliability of communication between the terminal and the network device.

In some embodiments, the first indication information is bitmap information, and each bit in the bitmap information is configured to indicate whether a coefficient corresponding to the bit is a non-zero coefficient.

In an embodiment of the present disclosure, the bitmap information includes a plurality of bits, and each bit indicates whether the combination coefficient at the corresponding position is the non-zero coefficient.

In some embodiments, the bitmap information is represented by a bitmap. Alternatively, the bitmap information is represented by other manners.

For example, when a bit is 0, it indicates that a combination coefficient corresponding to the bit is the non-zero coefficient, and when the bit is 1, it indicates that the combination coefficient corresponding to the bit is not the non-zero coefficient. For another example, when the bit is 1, it indicates that the combination coefficient corresponding to the bit is the non-zero coefficient, and when the bit is 0, it indicates that the combination coefficient corresponding to the bit is not the non-zero coefficient.

It should be noted that a size of the first indication information in embodiments of the present disclosure is determined according to the codebook parameters.

In some embodiments, the terminal may determine the size of the first indication information based on the number of SD basis vectors or the number of ports and the number of FD basis vectors, or determine the size of the first indication information based on the number of pairs of SD and FD basis vectors, or determine the size of the first indication information in other ways, which is not limited in embodiments of the present disclosure.

In some embodiments, when the codebook parameters of the plurality of TRP groups are the same, one piece of bitmap information is determined according to the configuration information, and the bitmap information indicates the position of the non-zero coefficient among the combination coefficients corresponding to the plurality of TRP groups.

In an embodiment of the present disclosure, the codebook parameters of the plurality of TRP groups configured by the network device for the terminal are the same, that is, the codebook parameter corresponding to each TRP is the same. In this case, one piece of bitmap information can be configured, and the position of the non-zero coefficient among the combination coefficients corresponding to the plurality of TRP groups can be indicated by this bitmap information.

For example, one piece of bitmap information with $N*2L_n*M_n$ bits is used for indication, or one piece of bitmap information with $N*Kn$ bits is used for indication, where N is the number of TRP groups used for CJT, Ln is the number of SD basis vectors or the number of ports of the n-th TRP group, Mn is the number of FD basis vectors of the n-th TRP group, and Kn is the number of pairs of SD and FD basis vectors of the n-th TRP group.

In some embodiments, when codebook parameters of at least two TRP groups among the plurality of TRP groups are different, a plurality of pieces of bitmap information are determined according to the configuration information, and each piece of bitmap information indicates a position of a non-zero coefficient among a combination coefficient corresponding to at least one TRP group.

In an embodiment of the present disclosure, when the codebook parameters of the at least two TRP groups among the plurality of TRP groups configured by the network device for the terminal are different, that is, there are at least two TRPs with different codebook parameters. In this case, the plurality of pieces of bitmap information can be configured, and positions of non-zero coefficients among combination coefficients corresponding to different TRP groups with different codebook parameters are respectively indicated through the plurality of pieces of bitmap information.

For example, S pieces of bitmap information are used for indication, $S \leq N$, N is the number of TRP groups used for CJT, a size of the bitmap information is $2L_n*M_n$ or $K_n$ bits, or $X*2L_n*M_n$ or $X*K_n$ bits, where X represents that the number of SD basis vectors or the number of ports, the number of FD basis vectors, and the number of pairs of SD and FD basis vectors corresponding to X TRP groups are the same, N is the number of TRP groups used for CJT, $L_n$ is the number of SD basis vectors or the number of ports of the n-th TRP group, $M_n$ is the number of FD basis vectors of the n-th TRP group, and $K_n$ is the number of pairs of SD and FD basis vectors of the n-th TRP group.

In some other embodiments, the first indication information is a combination number, and the combination number has a mapping relationship with the position of the non-zero coefficient.

In embodiments of the present disclosure, the combination number has the mapping relationship with the position of the non-zero coefficient, that is, one combination number corresponds to positions of a group of non-zero coefficients. After the terminal determines the non-zero coefficient among the combination coefficient, it can determine the corresponding combination number according to the position of the non-zero coefficient and the mapping relationship, and then send the first indication information to the network device through the first indication information.

In some embodiments, when the codebook parameters of the plurality of TRP groups are the same, one combination number is determined according to the configuration information, and indication information corresponding to the combination number indicates the positions of the non-zero coefficients among the combination coefficients corresponding to the plurality of TRP groups.

In an embodiment of the present disclosure, the codebook parameters of the plurality of TRP groups configured by the network device for the terminal are the same, that is, the codebook parameter corresponding to each TRP is the same. In this case, one combination number can be configured, which can indicate the positions of the non-zero coefficients among the combination coefficients corresponding to the plurality of TRP groups.

It should be noted that the size of the first indication information in embodiments of the present disclosure is determined according to the codebook parameters.

In some embodiments, the terminal may determine the size of the first indication information based on the number of SD basis vectors or the number of ports and the number of FD basis vectors, or determine the size of the first indication information based on the number of pairs of SD and FD basis vectors, or determine the size of the first indication information in other ways, which is not limited in embodiments of the present disclosure. $\left\lceil \log_2 C_{NK_n}^{K_{0,tot}} \right\rceil$ or $\left\lceil \log_2 C_{NK_n-Y}^{K_{0,tot}-Y} \right\rceil$ bits are used for indication, that is, the combination number indicates the position of the non-zero coefficient, where N is the number of TRP groups used for CJT, $K_{0,tot}$ represents the number of non-zero coefficients corresponding to all TRPs, Y represents the number of strongest coefficients corresponding to N TRP groups, and $K_n$ is the number of pairs of SD and FD basis vectors of the n-th TRP group.

In some embodiments, when codebook parameters of at least two TRP groups among the plurality of TRP groups are different, a plurality of combination numbers are determined according to the configuration information, and each combination number corresponds to a position of a non-zero coefficient among a combination coefficient corresponding to at least one TRP group.

In an embodiment of the present disclosure, when the codebook parameters of the at least two TRP groups among the plurality of TRP groups configured by the network device for the terminal are different, that is, there are at least two TRPs with different codebook parameters. In this case, the plurality of combination numbers can be configured, and positions of non-zero coefficients among combination coefficients corresponding to different TRP groups with different codebook parameters are respectively indicated by the plurality of combination numbers.

For example, S combination numbers are used for indication, S≤N, and the indication overhead of each combination number is $\left\lceil \log_2 C_{K_n}^{K_{0,n}} \right\rceil + \left\lceil \log_2^{K_{0,n}} \right\rceil$ bits or $\left\lceil \log_2 C_{XK_n}^{Z} \right\rceil + \left\lceil \log_2^{Z} \right\rceil$ bits, where N is the number of TRP groups used for CJT, $Z$ represents combination coefficients corresponding to X TRP groups, and the number of SD basis vectors or the number of ports, the number of FD basis vectors, and the number of pairs of SD and FD basis vectors corresponding to the X TRP groups are the same. $K_{0,n}$ represents the number of non-zero coefficients corresponding to the n-th TRP group, and $K_n$ is the number of pairs of SD and FD basis vectors of the n-th TRP group.

In the solution provided by embodiments of the present disclosure, the terminal can indicate the positions of the non-zero coefficients among the combination coefficients corresponding to the plurality of TRP groups through different first indication information, thereby expanding the diversity of indicating the non-zero coefficient through the first indication information.

In some embodiments, the network device receives the first quantization coefficient sent by a terminal.

In embodiments of the present disclosure, after the terminal determines the combination coefficients of the plurality of TRP groups, it can quantizes the determined combination coefficients of the plurality of TRP groups to obtain the quantized first quantization coefficients. It can also be understood that the terminal quantizing the combination coefficients of the plurality of TRP groups means that the combination coefficients are expressed in other ways to facilitate the terminal to report the combination coefficients to the network device, that is, the terminal sends the first quantization coefficients to the network device, and the network device receives the first quantization coefficients sent by the terminal.

**Quantization manner 1:** the terminal normalizes the combination coefficients corresponding to the plurality of TRP groups to obtain the normalized first normalization coefficients, and then differentially quantizes the obtained first normalization coefficients according to a polarization direction to obtain the first quantization coefficients.

Normalizing the combination coefficients corresponding to the plurality of TRP groups refers to selecting the largest combination coefficient from the combination coefficients corresponding to the plurality of TRP groups, and obtaining a value by dividing each combination coefficient by the largest combination coefficient to form the first normalization coefficient.

Differential quantization means that for a combination coefficient, a reference amplitude and a differential coefficient are used to jointly indicate the combination coefficient, and the reference amplitude and the differential coefficient are quantized.

In embodiments of the present disclosure, the terminal normalizes the combination coefficients corresponding to the plurality of TRP groups to obtain the normalized first normalization coefficients, and then uses the reference amplitudes and the differential coefficients to jointly indicate the first normalization coefficients, thereby obtaining the first quantization coefficients after quantizing the first normalization coefficients. It can also be understood that the terminal normalizes the combination corresponding to all TRPs in the plurality of TRP groups to obtain the normalized first normalization coefficients.

In some embodiments, normalizing the combination coefficients corresponding to the plurality of TRP groups refers to determining the largest combination coefficient among the combination coefficients corresponding to the plurality of TRP groups, and dividing each combination coefficient corresponding to the plurality of TRP groups by the largest combination coefficient to obtain the first normalization coefficient.

In some embodiments, the polarization direction includes a first polarization direction and a second polarization direction. Differentially quantizing, by the terminal, the first normalization coefficient according to the polarization direction to obtain the first quantization coefficient includes: the terminal determines, according to the first normalization coefficient, a reference amplitude and the corresponding differential coefficient of each TRP group in the first polarization direction and a reference amplitude and the corresponding differential coefficient of each TRP group in the second polarization direction and quantizes the reference amplitude and the corresponding differential coefficient of each TRP group in the first polarization direction and the reference amplitude and the corresponding differential coefficient of each TRP group in the second polarization direction to obtain the first quantization coefficient.

It should be noted that in embodiments of the present disclosure, the reference amplitude of the TRP group in the first polarization direction and the reference amplitude of the TRP group in the second polarization direction include a plurality of cases.

First case: reference amplitudes of the plurality of TRP groups in the first polarization direction are the same, and reference amplitudes of the plurality of TRP groups in the second polarization reference direction are the same.

Second case: reference amplitudes of at least two of the plurality of TRP groups in the first polarization direction are different, reference amplitudes of the at least two of the plurality of TRP groups in the second polarization reference direction are different, reference amplitudes of a plurality of TRPs included in each TRP group in the first polarization direction are the same or different, and reference amplitudes of the plurality of TRPs included in each TRP group in the second polarization direction are the same or different.

Third case: the reference amplitudes of the at least two of the plurality of TRP groups in the first polarization direction are different, the reference amplitudes of the plurality of TRP groups in the second polarization reference direction are the same, and the reference amplitudes of the plurality of TRPs included in each TRP group in the first polarization direction are the same or different.

Fourth case: the reference amplitudes of the plurality of TRP groups in the first polarization direction are the same, the reference amplitudes of the at least two of the plurality of TRP groups in the second polarization reference direction are different, and the reference amplitudes of the plurality of TRPs included in each TRP group in the second polarization direction are the same or different.

In addition, the above embodiment illustrates that the terminal can perform differential quantization on the first normalization coefficient, and in another embodiment, the terminal will also send second indication information to the network device, and the second indication information is configured to indicate that at least one of the largest reference amplitude or the strongest coefficient is not to be quantized and reported, and the network device will receive the second indication information sent by the terminal.

The largest reference amplitude is the maximum reference amplitude among the reference amplitudes included in the first quantization coefficients, and the strongest coefficient is a coefficient with the strongest differential coefficient among the first quantization coefficients.

In some embodiments, when the second indication information is configured to indicate the largest reference amplitude and the strongest coefficient, one piece of second indication information can be used to indicate both the largest reference amplitude and the strongest coefficient, or two pieces of second indication information can be used to respectively indicate the largest reference amplitude and the strongest coefficient.

It should be noted that a size of the second indication information for indicating the largest reference amplitude is different from a size of the second indication information for indicating the strongest coefficient. It can also be understood that the second indication information for indicating the largest reference amplitude and the second indication information for indicating the strongest coefficient are two pieces of different information.

In some embodiments, the second indication information may use the bitmap information or the combination number to indicate that at least one of the largest reference amplitude or the strongest coefficient is not to be quantized and reported.

In some embodiments, the second indication information is the bitmap information, and each bit in the bitmap information is configured to indicate a position of at least one of the largest reference amplitude or the strongest coefficient of a TRP group corresponding to the bit.

In some embodiments, the codebook parameters corresponding to each TRP group are the same, and N bits of bitmap information are used to indicate the position of the largest reference amplitude. N is the number of TRP groups used for CJT. $N*2L_n*M_n$ bits or $N*K_n$ bits are used to indicate the position of the strongest coefficient.

In some embodiments, the second indication information is the combination number, and the combination number is configured to indicate a position of at least one of the largest reference amplitude or the strongest coefficient of each TRP group.

For example, the combination number uses $\lceil \log_2^N \rceil$ bits to indicate the largest reference amplitude. N is the number of TRP groups. Alternatively, the combination number uses $\lceil \log_2^{2*L_n*N} \rceil$ or $\lceil \log_2^{K_{0,tot}} \rceil$ or $\lceil \log_2^{N*2*L_n*M_n} \rceil$ or $\lceil \log_2^{N*2*K_n} \rceil$ to indicate the position of the strongest coefficient. N is the number of TRP groups used for CJT, $K_{0,tot}$ represents the number of non-zero coefficients corresponding to all TRP groups, $K_n$ is the number of pairs of SD and FD basis vectors of the n-th TRP group. $M_n$ is the number of FD basis vectors of the n-th TRP group.

The differential quantization involved in the present disclosure is explained below by way of example.

For example, if a TRP group includes one TRP, then the present disclosure involves two TRPs serving one terminal through CJT, and the third codebook structure in the above embodiment is used between the terminal and the network device to calculate the precoding of data transmission, and the reference amplitudes of the plurality of TRP groups in the first polarization direction are the same, and the reference amplitudes of the plurality of TRP groups in the second polarization reference direction are the same. The network device configures for the terminal that the number M of FD basis vectors corresponding to two TRPs is 4, and the number of SD basis vectors corresponding to each TRP is $L_n = 2$. The terminal uses a codebook calculation method according to the downlink channel from the two TRPs to the terminal to obtain a combination coefficient matrix corresponding to the two TRPs:

$$\widetilde{W}_2 = \begin{bmatrix} c_{1,1}^{0,1} & c_{1,2}^{0,1} & c_{1,3}^{0,1} & c_{1,4}^{0,1} \\ c_{2,1}^{0,1} & c_{2,2}^{0,1} & c_{2,3}^{0,1} & c_{2,4}^{0,1} \\ c_{3,1}^{1,1} & c_{3,2}^{1,1} & c_{3,3}^{1,1} & c_{3,4}^{1,1} \\ c_{4,1}^{1,1} & c_{4,2}^{1,1} & c_{4,3}^{1,1} & c_{4,4}^{1,1} \\ c_{1,1}^{0,2} & c_{1,2}^{0,2} & c_{1,3}^{0,2} & c_{1,4}^{0,2} \\ c_{2,1}^{0,2} & c_{2,2}^{0,2} & c_{2,3}^{0,2} & c_{2,4}^{0,2} \\ c_{3,1}^{1,2} & c_{3,2}^{1,2} & c_{3,3}^{1,2} & c_{3,4}^{1,2} \\ c_{4,1}^{1,2} & c_{4,2}^{1,2} & c_{4,3}^{1,2} & c_{4,4}^{1,2} \end{bmatrix}$$

where, $c_{l,m}^{p,n}$ represents a combination coefficient in the *l*-th row and *m*-th column in a combination coefficient matrix in the p-th polarization direction corresponding to the n-th TRP. First, each coefficient in $\widetilde{W}_2$ is normalized, and the normalized coefficient is differentially expressed in the following manner:

$$\widetilde{\widetilde{W}}_2 = \begin{bmatrix} r_0 d_{1,1}^{0,1} & r_0 d_{1,2}^{0,1} & r_0 d_{1,3}^{0,1} & r_0 d_{1,4}^{0,1} \\ r_0 d_{2,1}^{0,1} & r_0 d_{2,2}^{0,1} & r_0 d_{2,3}^{0,1} & r_0 d_{2,4}^{0,1} \\ r_1 d_{3,1}^{1,1} & r_1 d_{3,2}^{1,1} & r_1 d_{3,3}^{1,1} & r_1 d_{3,4}^{1,1} \\ r_1 d_{4,1}^{1,1} & r_1 d_{4,2}^{1,1} & r_1 d_{4,3}^{1,1} & r_1 d_{4,4}^{1,1} \\ r_0 d_{1,1}^{0,2} & r_0 d_{1,2}^{0,2} & r_0 d_{1,3}^{0,2} & r_0 d_{1,4}^{0,2} \\ r_0 d_{2,1}^{0,2} & r_0 d_{2,2}^{0,2} & r_0 d_{2,3}^{0,2} & r_0 d_{2,4}^{0,2} \\ r_1 d_{3,1}^{1,2} & r_1 d_{3,2}^{1,2} & r_1 d_{3,3}^{1,2} & r_1 d_{3,4}^{1,2} \\ r_1 d_{4,1}^{1,2} & r_1 d_{4,2}^{1,2} & r_1 d_{4,3}^{1,2} & r_1 d_{4,4}^{1,2} \end{bmatrix}$$

where $r_0$ and $r_1$ represent reference amplitudes of the two TRPs in the first polarization direction and the second polarization direction, respectively, and $d_{l,m}^{p,n}$ represents a differential coefficient in the *l*-th row and *m*-th column in a combination coefficient matrix in the p-th polarization direction corresponding to the n-th TRP.

Assuming that the strongest coefficient in the above equation is located in the first polarization direction of the first TRP, the reference amplitude in the above equation $r_0 = 1$, and the reference amplitude is not reported.

For another example, the reference amplitudes of the two TRPs in the first polarization direction are different, and the reference amplitudes of the two TRPs in the second polarization reference direction are different, then the matrix obtained by normalization is the same as the above example, and the normalized coefficient is differentially expressed in the following manner:

$$\widetilde{\widetilde{W}}'_2 = \begin{bmatrix} r_0 d_{1,1}^{0,1} & r_0 d_{1,2}^{0,1} & r_0 d_{1,3}^{0,1} & r_0 d_{1,4}^{0,1} \\ r_0 d_{2,1}^{0,1} & r_0 d_{2,2}^{0,1} & r_0 d_{2,3}^{0,1} & r_0 d_{2,4}^{0,1} \\ r_1 d_{3,1}^{1,1} & r_1 d_{3,2}^{1,1} & r_1 d_{3,3}^{1,1} & r_1 d_{3,4}^{1,1} \\ r_1 d_{4,1}^{1,1} & r_1 d_{4,2}^{1,1} & r_1 d_{4,3}^{1,1} & r_1 d_{4,4}^{1,1} \\ r_2 d_{1,1}^{0,2} & r_2 d_{1,2}^{0,2} & r_2 d_{1,3}^{0,2} & r_2 d_{1,4}^{0,2} \\ r_2 d_{2,1}^{0,2} & r_2 d_{2,2}^{0,2} & r_2 d_{2,3}^{0,2} & r_2 d_{2,4}^{0,2} \\ r_3 d_{3,1}^{1,2} & r_3 d_{3,2}^{1,2} & r_3 d_{3,3}^{1,2} & r_3 d_{3,4}^{1,2} \\ r_3 d_{4,1}^{1,2} & r_3 d_{4,2}^{1,2} & r_3 d_{4,3}^{1,2} & r_3 d_{4,4}^{1,2} \end{bmatrix}$$

In the above equation $r_0$, and $r_1$ represent the reference amplitudes of the first polarization direction and the second polarization direction of the first TRP, $r_2$ and $r_3$ represent the reference amplitudes of the first polarization direction and the second polarization direction of the second TRP, respectively. $d_{l,m}^{p,n}$ represents the differential coefficient of the *lth* row and *mth column* in the combination coefficient matrix in the pth polarization direction corresponding to the n-th TRP.

Still assuming that the strongest coefficient in the above equation is located in the first polarization direction of the first TRP, then $r_0 = 1$, this reference amplitude is not reported, other reference amplitudes $r_1$, $r_2$ and $r_3$ are quantized and reported through a=4 bits, and the non-zero differential coefficient $d_{l,m}^{p,n}$ includes a differential amplitude and a differential phase. The differential amplitude and the differential phase are quantized and reported through b=3 bits and c=4 bits, respectively.

**Quantization manner 2:** the terminal normalizes the combination coefficient corresponding to each of the plurality of TRP groups to obtain a second normalization coefficient and a normalization amplitude corresponding to each TRP group, quantizes the normalization amplitude, and differentially quantizes, according to the polarization direction, the second normalization coefficient corresponding to each TRP group to obtain the quantized first quantization coefficient.

Normalizing the combination coefficient corresponding to each of the plurality of TRP groups means extracting one normalization amplitude for a combination coefficient corresponding to each TRP group, and then obtaining a value by dividing the combination coefficient corresponding to each TRP group by the corresponding normalization amplitude to constitute the second normalization coefficient.

In some embodiments, the normalization amplitude is obtained by extracting one target amplitude for the combination coefficient corresponding to each TRP group, where the target amplitude is the maximum amplitude included in the combination coefficient corresponding to each TRP group, and then selecting the largest target amplitude from target amplitudes corresponding to the plurality of TRP groups, and dividing the target amplitude corresponding to each TRP group by the largest target amplitude to obtain the normalization amplitude corresponding to each TRP group.

Differential quantization means that for a second normalization coefficient, the reference amplitude and the differential coefficient are used to jointly indicate the second normalization coefficient, and the reference amplitude and the differential coefficient are quantized.

In some embodiments, if each TRP group includes one TRP, it means that normalization is performed on one TRP, and subsequent processes are performed in sequence; and if each TRP group includes a plurality of TRPs, it means that normalization is performed on one TRP group consisting of a plurality of TRPs, and subsequent processes are performed in sequence.

Next, two solutions for obtaining the first quantization coefficient are described.

First solution: the polarization direction includes a first polarization direction and a second polarization direction, and quantizing, by the terminal, the normalization amplitude and differentially quantizing, according to the polarization direction, the second normalization coefficient corresponding to each TRP group to obtain the quantized first quantization coefficient include: determining, according to the second normalization coefficient, the reference amplitude and the corresponding differential coefficient of each TRP group in the first polarization direction and the reference amplitude and the corresponding differential coefficient of each TRP group in the second polarization direction; and quantizing the normalization amplitude, the reference amplitude and the corresponding differential coefficient of each TRP group in the first polarization direction and the reference amplitude and the corresponding differential coefficient of each TRP group in the second polarization direction to obtain the first quantization coefficient.

Second solution: the polarization direction includes a first polarization direction and a second polarization direction, and quantizing, by the terminal, the normalization amplitude and differentially quantizing, according to the polarization direction, the second normalization coefficient corresponding to each TRP group to obtain the quantized first quantization coefficient include: determining, according to the second normalization coefficient and the normalization amplitude, the reference amplitude and the corresponding differential coefficient of each TRP group in the first polarization direction and the reference amplitude and the corresponding differential coefficient of each TRP group in the second polarization direction; and quantizing the reference amplitude and the corresponding differential coefficient of each TRP group in the first polarization direction and the reference amplitude and the corresponding differential coefficient of each TRP group in the second polarization direction to obtain the first quantization coefficient, and the reference amplitude includes a product of an initial amplitude of the second normalization coefficient and the normalization amplitude.

The initial amplitude refers to an amplitude of each TRP group in the first polarization direction and an amplitude of each TRP group in the second polarization direction determined by the terminal according to the second normalization coefficient, that is, the reference amplitudes in the two polarization directions determined according to the second normalization coefficient in the above first solution.

It should be noted that in embodiments of the present disclosure, the reference amplitude of the TRP group in the first polarization direction and the reference amplitude of the TRP group in the second polarization direction include a plurality of cases.

First case: reference amplitudes of the plurality of TRP groups in the first polarization direction are the same, and reference amplitudes of the plurality of TRP groups in the second polarization reference direction are the same.

Second case: reference amplitudes of at least two of the plurality of TRP groups in the first polarization direction are different, reference amplitudes of the at least two of the plurality of TRP groups in the second polarization reference direction are different, reference amplitudes of a plurality of TRPs included in each TRP group in the first polarization direction are the same or different, and reference amplitudes of the plurality of TRPs included in each TRP group in the second polarization direction are the same or different。

Third case: the reference amplitudes of the at least two of the plurality of TRP groups in the first polarization direction are different, the reference amplitudes of the plurality of TRP groups in the second polarization reference direction are the same, and the reference amplitudes of the plurality of TRPs included in each TRP group in the first polarization direction are the same or different.

Fourth case: the reference amplitudes of the plurality of TRP groups in the first polarization direction are the same, the reference amplitudes of the at least two of the plurality of TRP groups in the second polarization reference direction are different, and the reference amplitudes of the plurality of TRPs included in each TRP group in the second polarization direction are the same or different.

In addition, the above embodiment illustrates that the terminal can perform differential quantization on the second normalization coefficient and can quantize the normalization amplitude. In another embodiment, the terminal will also send third indication information to the network device, and the third indication information is further configured to indicate that at least one of the largest reference amplitude, the strongest coefficient or the largest normalization amplitude is not to be quantized and reported.

In some embodiments, when the third indication information is configured to indicate at least two of the largest reference amplitude, the strongest coefficient, or the largest normalization amplitude, one piece of third indication information can be used to both indicate the largest reference amplitude and the strongest coefficient, or the third indication information can be used to indicate at least two of the largest reference amplitude, the strongest coefficient, or the largest normalization amplitude, respectively.

It should be noted that a size of the third indication information for indicating the largest reference amplitude, a size of the third indication information for indicating the strongest coefficient, and a size of the third indication information for indicating the largest normalization amplitude are different. It can also be understood that the third indication information for indicating the largest reference amplitude, the third indication information for indicating the strongest coefficient, and the third indication information for indicating the largest normalization amplitude are different information.

In some embodiments, the third indication information may use the bitmap information or the combination number to indicate that at least one of the largest reference amplitude, the strongest coefficient or the largest normalization amplitude is not quantized and reported.

In some embodiments, the third indication information is the bitmap information, and each bit in the bitmap information is configured to indicate a position of at least one of the largest reference amplitude, the strongest coefficient or the largest normalization amplitude of a TRP group corresponding to the bit.

In some embodiments, the codebook parameters corresponding to each TRP group are the same, and N bits of bitmap information are used to indicate the position of the largest reference amplitude. N is the number of TRP groups. $N*2L_n*M_n$ bits or $N*K_n$ bits are used to indicate the position of the strongest coefficient.

In some embodiments, the third indication information is the combination number, and the combination number indicates a position of at least one of the largest reference amplitude, the strongest coefficient or the largest normalization amplitude of each TRP group.

For example, the combination number uses $\lceil \log_2^N \rceil$ bits to indicate the largest reference amplitude. N is the number of TRP groups. For another example, the combination number uses $\lceil \log_2^{2*L_n} \rceil$ or $\lceil \log_2^{K_0} \rceil$ or $\lceil \log_2^{2*L_n*M_n} \rceil$ or $\lceil \log_2^{N2*K_n} \rceil$ to indicate the position of the strongest coefficient. N is the number of TRPs used for CJT, $K_0$ represents the number of non-zero coefficients corresponding to one TRP, $L_n$ is the number of SD basis vectors or the number of ports of the n-th TRP group, and $K_n$ is the number of pairs of SD and FD basis vectors of the n-th TRP. $M_n$ is the number of FD basis vectors of the n-th TRP.

For another example, the g-th TRP group contains $N_g$ TRPs, the strongest coefficient is indicated through $\lceil \log_2^{2*L_n*N_g} \rceil$ or $\lceil \log_2^{N_g*2*L_n*M_n} \rceil$ or $\lceil \log_2^{K_{0,tot,g}} \rceil$, and $K_{0,tot,g}$ represents the number of non-zero coefficients contained in the g-th TRP group. In this case, the largest reference amplitude does not need to be quantified and reported.

For another example, the g-th TRP group contains $N_g$ TRPs, the strongest coefficient is indicated through $\lceil \log_2^{2*L_n*N_g} \rceil$ or $\lceil \log_2^{N_g*2*L_n*M_n} \rceil$ or $\lceil \log_2^{K_{0,tot,g}} \rceil$, and $K_{0,tot,g}$ represents the number of non-zero coefficients contained in the g-th TRP group. In this case, the largest reference amplitude does not need to be quantified and reported.

The largest normalization amplitude is indicated by N bits or by $\lceil \log_2^N \rceil$, or the largest normalization amplitude corresponding to the n-th TRP group is configured by the network device. In this case, the largest normalization amplitude does not need to be quantized and reported. Alternatively, the largest normalization amplitude corresponding to the n-th TRP group is stipulated by the communication protocol.

For example, one TRP group includes one TRP, and the present disclosure involves two TRPs serving one terminal through CJT, and the first codebook structure in the above embodiment is used between the terminal and the network device to calculate the precoding of data transmission, and the two TRPs have different reference amplitudes in the first polarization direction, and the two TRPs have different reference amplitudes in the second polarization reference direction. The network device configures for the terminal that the number M of FD basis vectors corresponding to the two TRPs is 4, and the number of SD basis vectors corresponding to each TRP is $L_n = 2$.

First, the two TRPs are normalized respectively to obtain:

$$\widetilde{\widetilde{W}}_2 = \begin{bmatrix} s_0 W_{2,1} \\ s_1 W_{2,2} \end{bmatrix}$$

where,

$$W_{2,1} = \begin{bmatrix} r_0 d_{1,1}^{0,1} & r_0 d_{1,2}^{0,1} & r_0 d_{1,3}^{0,1} & r_0 d_{1,4}^{0,1} \\ r_0 d_{2,1}^{0,1} & r_0 d_{2,2}^{0,1} & r_0 d_{2,3}^{0,1} & r_0 d_{2,4}^{0,1} \\ r_1 d_{3,1}^{1,1} & r_1 d_{3,2}^{1,1} & r_1 d_{3,3}^{1,1} & r_1 d_{3,4}^{1,1} \\ r_1 d_{4,1}^{1,1} & r_1 d_{4,2}^{1,1} & r_1 d_{4,3}^{1,1} & r_1 d_{4,4}^{1,1} \end{bmatrix}$$

$$W_{2,2} = \begin{bmatrix} r_2 d_{1,1}^{0,2} & r_2 d_{1,2}^{0,2} & r_2 d_{1,3}^{0,2} & r_2 d_{1,4}^{0,2} \\ r_2 d_{2,1}^{0,2} & r_2 d_{2,2}^{0,2} & r_2 d_{2,3}^{0,2} & r_2 d_{2,4}^{0,2} \\ r_3 d_{3,1}^{1,2} & r_3 d_{3,2}^{1,2} & r_3 d_{3,3}^{1,2} & r_3 d_{3,4}^{1,2} \\ r_3 d_{4,1}^{1,2} & r_3 d_{4,2}^{1,2} & r_3 d_{4,3}^{1,2} & r_3 d_{4,4}^{1,2} \end{bmatrix}$$

$W_{2,1}$ and $W_{2,2}$ represent combination coefficient matrices corresponding to the first TRP and the second TRP after differential operation, respectively. $r_0$ and $r_1$ represent reference amplitudes of the first TRP in the first polarization direction and the second polarization direction, respectively, $r_2$ and $r_3$ represent reference amplitudes of the second TRP in the first polarization direction and the second polarization direction, respectively. $d_{l,m}^{p,n}$ represents a differential coefficient in the $l$-th row and $m$-th column in a combination coefficient matrix in the p-th polarization direction corresponding to the n-th TRP. $s_0$ and $s_1$ are target amplitudes corresponding to the first TRP and the second TRP, respectively. Assuming that the strongest coefficients of the two combination coefficients are both in the first polarization direction, then $r_0 = 1$ and $r_2 = 1$, that is, these two reference amplitudes do not need to be reported, and $r_1$ and $r_3$ are quantized by a=4 bits, and the non-zero differential coefficient $d_{l,m}^{p,n}$ includes a differential amplitude and a differential phase. The differential amplitude and the differential phase are quantized and reported by b=3 bits and c=4 bits, respectively.

Then $s_0$ and $s_1$ in $\widetilde{\widetilde{W}}_2$ are normalized. Assuming that $s_0 > s_1$, then $\widetilde{\widetilde{W}}_2' = \begin{bmatrix} t_0 W_{2,1} \\ t_1 W_{2,2} \end{bmatrix}$, where $t_0$ = 1and $t_1 = \dfrac{s_1}{s_0}$ represent the normalization amplitudes corresponding to the two TRPs. The largest normalization amplitude $t_0$ does not need to be quantized and reported, but $t_1$ is quantized and reported through $d$= 4bits, and $\lceil \log_2^N \rceil$ bits are used to indicate which TRP corresponds to the maximum amplitude.

It should be noted that in the above embodiments, after it is determined that $\widetilde{\widetilde{W}}_2' = \begin{bmatrix} t_0 W_{2,1} \\ t_1 W_{2,2} \end{bmatrix}$, the reporting is directly performed, while in some other embodiments, after it is determined that $\widetilde{\widetilde{W}}_2' = \begin{bmatrix} t_0 W_{2,1} \\ t_1 W_{2,2} \end{bmatrix}$, where $t_0$ = 1 and $t_1 = \dfrac{s_1}{s_0}$ represent the normalization amplitudes corresponding to the two TRPs, it is also needed to further determine:

$$\widetilde{\widetilde{W}}_2'' = \begin{bmatrix} W'_{2,1} \\ W'_{2,2} \end{bmatrix}$$

$$W'_{2,1} = \begin{bmatrix} e_0 d_{1,1}^{0,1} & e_0 d_{1,2}^{0,1} & e_0 d_{1,3}^{0,1} & e_0 d_{1,4}^{0,1} \\ e_0 d_{2,1}^{0,1} & e_0 d_{2,2}^{0,1} & e_0 d_{2,3}^{0,1} & e_0 d_{2,4}^{0,1} \\ e_1 d_{3,1}^{1,1} & e_1 d_{3,2}^{1,1} & e_1 d_{3,3}^{1,1} & e_1 d_{3,4}^{1,1} \\ e_1 d_{4,1}^{1,1} & e_1 d_{4,2}^{1,1} & e_1 d_{4,3}^{1,1} & e_1 d_{4,4}^{1,1} \end{bmatrix}$$

$$W'_{2,2} = \begin{bmatrix} e_2 d_{1,1}^{0,2} & e_2 d_{1,2}^{0,2} & e_2 d_{1,3}^{0,2} & e_2 d_{1,4}^{0,2} \\ e_2 d_{2,1}^{0,2} & e_2 d_{2,2}^{0,2} & e_2 d_{2,3}^{0,2} & e_2 d_{2,4}^{0,2} \\ e_3 d_{3,1}^{1,2} & e_3 d_{3,2}^{1,2} & e_3 d_{3,3}^{1,2} & e_3 d_{3,4}^{1,2} \\ e_3 d_{4,1}^{1,2} & e_3 d_{4,2}^{1,2} & e_3 d_{4,3}^{1,2} & e_3 d_{4,4}^{1,2} \end{bmatrix}$$

where, $e_0 = t_0 * r_0$, $e_1 = t_0 * r_1$, $e_2 = t_1 * r_2$, $e_3 = t_1 * r_3$, and $e_0$, $e_1$, $e_2$ and $e_3$ are quantized through 4 bits, respectively.

In embodiments of the present disclosure, the combination coefficient is reported to the network device in a plurality of quantization modes, which expands a manner in which the terminal reports the position of the non-zero coefficient among the combination coefficients, and is used for the network device to obtain non-zero coefficient position information corresponding to the plurality of TRPs, thereby ensuring reliability of communication between the terminal and the network device. In addition, the diversity of the mode of the terminal reporting the combination coefficient is expanded.

FIG. 7 shows a block diagram of an apparatus for indicating a coefficient provided by an embodiment of the present disclosure. Referring to FIG. 7, the apparatus includes:

a receiving module 701, configured to configuration information sent by a network device, wherein the configuration information is configured to configure codebook parameters of a plurality of TRP groups, and each TRP group includes at least one TRP;

a determination module 702, configured to determine first indication information according to the configuration information, wherein the first indication information is configured to indicate a position of a non-zero coefficient among combination coefficients, the combination coefficients are coefficients determined by the terminal according to the codebook parameters of the plurality of TRP groups, and the combination coefficients are used by the network device to perform precoding calculation; and

a sending module 703, configured to send the first indication information to the network device.

In some embodiments, the first indication information is bitmap information, and each bit in the bitmap information is configured to indicate whether a coefficient corresponding to the bit is a non-zero coefficient; or,

the first indication information is a combination number, and the combination number has a mapping relationship with the position of the non-zero coefficient.

In some embodiments, the determination module 702 is further configured to:

in a case where the codebook parameters of the plurality of TRP groups are the same, determine one piece of bitmap information according to the configuration information, wherein the bitmap information is configured to indicate the position of the non-zero coefficient among the combination coefficients corresponding to the plurality of TRP groups; or,

in a case where codebook parameters of at least two of the plurality of TRP groups are different, determine a plurality of pieces of bitmap information according to the configuration information, wherein each piece of bitmap information is configured to indicate a position of a non-zero coefficient among a combination coefficient corresponding to at least one TRP group.

In some embodiments, the determination module 702 is further configured to:

in a case where the codebook parameters of the plurality of TRP groups are the same, determine one combination number according to the configuration information, wherein indication information corresponding to the combination number is configured to indicate the position of the non-zero coefficient among the combination coefficients corresponding to the plurality of TRP groups; or,

in a case where codebook parameters of at least two of the plurality of TRP groups are different, determine a plurality of combination numbers according to the configuration information, wherein each combination number corresponds to a position of a non-zero coefficient among a combination coefficient corresponding to at least one TRP group.

In some embodiments, a size of the first indication information is determined according to the codebook parameters.

In some embodiments, the codebook parameters include at least one of a number of SD basis vectors, a number of ports, a number of FD basis vectors, and a number of pairs of SD basis vectors and FD basis vectors.

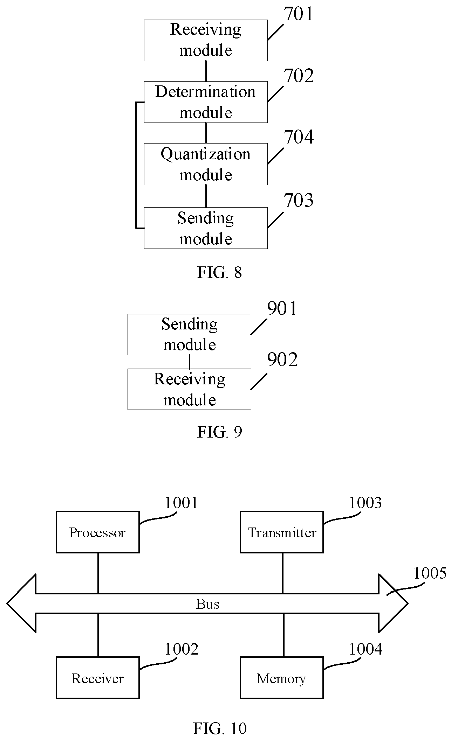

In some embodiments, referring to FIG. 8, the apparatus further includes:

a quantization module 704, configured to quantize the combination coefficients of the plurality of TRP groups to obtain the quantized first quantization coefficients; and

the sending module 703 is configured to send the first quantization coefficients to the network device.

In some embodiments, the quantization module 704 is further configured to:

normalize the combination coefficients corresponding to the plurality of TRP groups to obtain the normalized first normalization coefficients; and

differentially quantize the first normalization coefficients according to a polarization direction to obtain the first quantization coefficients.

In some embodiments, the polarization direction includes a first polarization direction and a second polarization direction, and the quantization module 704 is further configured to:

determine, according to the first normalization coefficients, a reference amplitude and a corresponding differential coefficient of each TRP group in the first polarization direction and a reference amplitude and a corresponding differential coefficient of each TRP group in the second polarization direction; and

quantize the reference amplitude and the corresponding differential coefficient of each TRP group in the first polarization direction and the reference amplitude and the corresponding differential coefficient of each TRP group in the second polarization direction to obtain the first quantization coefficients.

In some embodiments, the apparatus further includes:

the sending module 703, configured to send second indication information to the network device; and
the second indication information is configured to indicate that at least one of a largest reference amplitude or a strongest coefficient is not to be quantized and reported.

In some embodiments, the second indication information is bitmap information, and each bit in the bitmap information is configured to indicate a position of at least one of the largest reference amplitude or the strongest coefficient of a TRP group corresponding to the bit; or,
the second indication information is a combination number, and the combination number is configured to indicate a position of at least one of the largest reference amplitude or the strongest coefficient of each TRP group.
In some embodiments, the quantization module 704 is further configured to:

normalize a combination coefficient corresponding to each of the plurality of TRP groups to obtain a second normalization coefficient and a normalization amplitude corresponding to each TRP group; and
quantize the normalization amplitude, and differentially quantize, according to a polarization direction, the second normalization coefficient corresponding to each TRP group to obtain the quantized first quantization coefficients.

In some embodiments, the polarization direction includes a first polarization direction and a second polarization direction, and the quantization module 704 is further configured to:

determine, according to the second normalization coefficient, a reference amplitude and a corresponding differential coefficient of each TRP group in the first polarization direction and a reference amplitude and a corresponding differential coefficient of each TRP group in the second polarization direction, and quantize the normalization amplitude, the reference amplitude and the corresponding differential coefficient of each TRP group in the first polarization direction and the reference amplitude and the corresponding differential coefficient of each TRP group in the second polarization direction to obtain the first quantization coefficients; or,
determine, according to the second normalization coefficient and the normalization amplitude, the reference amplitude and the corresponding differential coefficient of each TRP group in the first polarization direction and the reference amplitude and the corresponding differential coefficient of each TRP group in the second polarization direction, and quantize the reference amplitude and the corresponding differential coefficient of each TRP group in the first polarization direction and the reference amplitude and the corresponding differential coefficient of each TRP group in the second polarization direction to obtain the first quantization coefficients, wherein the reference amplitude includes a product of an initial amplitude of the second normalization coefficient and the normalization amplitude.

In some embodiments, the apparatus further includes:

the sending module 70 3, configured to send third indication information to the network device; and
the third indication information is configured to indicate that at least one of a largest reference amplitude, a strongest coefficient or a largest normalization amplitude is not to be quantized and reported.

In some embodiments, the third indication information is bitmap information, and each bit in the bitmap information is configured to indicate a position of at least one of the largest reference amplitude, the strongest coefficient or the largest normalization amplitude of a TRP group corresponding to the bit; or,
the third indication information is a combination number, and the combination number is configured to indicate a position of at least one of the largest reference amplitude, the strongest coefficient or the largest normalization amplitude of each TRP group.
In some embodiments, reference amplitudes of the plurality of TRP groups in the first polarization direction are the same, and reference amplitudes of the plurality of TRP groups in the second polarization reference direction are the same; or,

reference amplitudes of at least two of the plurality of TRP groups in the first polarization direction are different, reference amplitudes of the at least two of the plurality of TRP groups in the second polarization reference direction are different, reference amplitudes of a plurality of TRPs included in each TRP group in the first polarization direction are the same or different, and reference amplitudes of the plurality of TRPs included in each TRP group in the second polarization direction are the same or different; or,

the reference amplitudes of the at least two of the plurality of TRP groups in the first polarization direction are different, the reference amplitudes of the plurality of TRP groups in the second polarization reference direction are the same, and the reference amplitudes of the plurality of TRPs included in each TRP group in the first polarization direction are the same or different; or,

the reference amplitudes of the plurality of TRP groups in the first polarization direction are the same, the reference amplitudes of the at least two of the plurality of TRP groups in the second polarization reference direction are different, and the reference amplitudes of the plurality of TRPs included in each TRP group in the second polarization direction are the same or different.

It should be noted that when implementing its functions, the apparatus provided in the above embodiments is only exemplified with division of abovementioned functional modules, and during a practical application, the above-mentioned functions may be allocated to be implemented by different functional modules according to requirements. That is, an internal structure of a device is divided into different functional modules to implement all or a part of the functions described above. In addition, the apparatus provided in the above embodiments has the same concept as the method embodiment, and reference may be made to the method embodiment for details of an implementation process of the apparatus, which is not described herein repeatedly anymore.

FIG. 9 shows a block diagram of an apparatus for indicating a coefficient provided by an embodiment of the present disclosure. Referring to FIG9, the apparatus includes:

a sending module 901, configured to send configuration information to a terminal, wherein the configuration information is configured to configure codebook parameters of a plurality of TRP groups, and each TRP group includes at least one TRP; and

a receiving module 902, configured to receive first indication information sent by the terminal, wherein the first indication information is determined by the terminal according to the configuration information, the first indication information is configured to indicate a position of a non-zero coefficient among combination coefficients, the combination coefficients are coefficients determined by the terminal according to the codebook parameters of the plurality of TRP groups, and the combination coefficients are used by the network device to perform precoding calculation.

In some embodiments, the first indication information is bitmap information, and each bit in the bitmap information is configured to indicate whether a coefficient corresponding to the bit is a non-zero coefficient; or,

the first indication information is a combination number, and the combination number has a mapping relationship with the position of the non-zero coefficient.

In some embodiments, a size of the first indication information is determined according to the codebook parameters.

In some embodiments, the codebook parameters include at least one of a number of SD basis vectors, a number of ports, a number of FD basis vectors, and a number of pairs of SD basis vectors and FD basis vectors.

In some embodiments, the receiving module 902 is further configured to receive first quantization coefficients sent by the terminal, wherein the first quantization coefficients are obtained by quantizing, by the terminal, the combination coefficients of the plurality of TRP groups.

In some embodiments, the first quantization coefficients are obtained by normalizing, by the terminal, the combination coefficients corresponding to the plurality of TRP groups to obtain the normalized first normalization coefficients and differentially quantizing the first normalization coefficients according to a polarization direction.

In some embodiments, the polarization direction includes a first polarization direction and a second polarization direction, and the first quantization coefficients are obtained by determining, by the terminal, according to the first normalization coefficients, a reference amplitude and a corresponding differential coefficient of each TRP group in the first polarization direction and a reference amplitude and a corresponding differential coefficient of each TRP group in the second polarization direction, and quantizing the reference amplitude and the corresponding differential coefficient of each TRP group in the first polarization direction and the reference amplitude and the corresponding differential coefficient of each TRP group in the second polarization direction.

In some embodiments, the receiving module 902 is further configured to receive second indication information sent by the terminal, wherein the second indication information is configured to indicate that at least one of a largest reference amplitude or a strongest coefficient is not to be quantized and reported.

In some embodiments, the second indication information is bitmap information, and each bit in the bitmap information is configured to indicate a position of at least one of the largest reference amplitude or the strongest coefficient of a TRP group corresponding to the bit; or,

the second indication information is a combination number, and the combination number is configured to indicate a position of at least one of the largest reference amplitude or the strongest coefficient of each TRP group.

In some embodiments, the first quantization coefficients are obtained by normalizing, by the terminal, a combination coefficient corresponding to each of the plurality of TRP groups to obtain a second normalization coefficient and a normalization amplitude corresponding to each TRP group, and quantizing the normalization amplitude, and differentially quantizing, according to a polarization direction, the second normalization coefficient corresponding to each TRP group.

In some embodiments, the polarization direction includes a first polarization direction and a second polarization direction, and the first quantization coefficients are obtained by determining, by the terminal, according to the second normalization coefficient, a reference amplitude and a corresponding differential coefficient of each TRP group in the first polarization direction and a reference amplitude and a corresponding differential coefficient of each TRP group in the second polarization direction, and quantizing the normalization amplitude, the reference amplitude and the corresponding differential coefficient of each TRP group in the first polarization direction and the reference amplitude and the corresponding differential coefficient of each TRP group in the second polarization direction, or, the first quantization coefficients are obtained by determining, by the terminal, according to the second normalization coefficient and the normalization amplitude, the reference amplitude and the corresponding differential coefficient of each TRP group in the first polarization direction and the reference amplitude and the corresponding differential coefficient of each TRP group in the second polarization direction, and quantizing the reference amplitude and the corresponding differential coefficient of each TRP group in the first polarization direction and the reference amplitude and the corresponding differential coefficient of each TRP group in the second polarization direction, wherein the reference amplitude includes a product of an initial amplitude of the second normalization coefficient and the normalization amplitude.

In some embodiments, the receiving module 902 is further configured to receive third indication information sent by the terminal, wherein the third indication information is configured to indicate that at least one of a largest reference amplitude, a strongest coefficient or a largest normalization amplitude is not to be quantized and reported.

In some embodiments, the third indication information is bitmap information, and each bit in the bitmap information is configured to indicate a position of at least one of the largest reference amplitude, the strongest coefficient or the largest normalization amplitude of a TRP group corresponding to the bit; or,

the third indication information is a combination number, and the combination number is configured to indicate a position of at least one of the largest reference amplitude, the strongest coefficient or the largest normalization amplitude of each TRP group.

In some embodiments, reference amplitudes of the plurality of TRP groups in the first polarization direction are the same, and reference amplitudes of the plurality of TRP groups in the second polarization reference direction are the same; or,

reference amplitudes of at least two of the plurality of TRP groups in the first polarization direction are different, reference amplitudes of the at least two of the plurality of TRP groups in the second polarization reference direction are different, reference amplitudes of a plurality of TRPs included in each TRP group in the first polarization direction are the same or different, and reference amplitudes of the plurality of TRPs included in each TRP group in the second polarization direction are the same or different; or,

the reference amplitudes of the at least two of the plurality of TRP groups in the first polarization direction are different, the reference amplitudes of the plurality of TRP groups in the second polarization reference direction are the same, and the reference amplitudes of the plurality of TRPs included in each TRP group in the first polarization direction are the same or different; or,

the reference amplitudes of the plurality of TRP groups in the first polarization direction are the same, the reference amplitudes of the at least two of the plurality of TRP groups in the second polarization reference direction are different, and the reference amplitudes of the plurality of TRPs included in each TRP group in the second polarization direction are the same or different.

It should be noted that when implementing its functions, the apparatus provided in the above embodiments is only exemplified with division of abovementioned functional modules, and during a practical application, the above-mentioned functions may be allocated to be implemented by different functional modules according to requirements. That is, an internal structure of a device is divided into different functional modules to implement all or a part of the functions described above. In addition, the apparatus provided in the above embodiments has the same concept as the method embodiment, and reference may be made to the method embodiment for details of an implementation process of the apparatus, which is not described herein repeatedly anymore.

FIG. 10 shows a schematic structural diagram of a communication device provided by an embodiment of the present disclosure. The communication device includes: a processor 1001, a receiver 1002, a transmitter 1003, a memory 1004 and a bus 1005.

The processor 1001 includes one or more processing cores, and the processor 1001 executes various functional applications and information processing by running software programs and modules.

The receiver 1002 and the transmitter 1003 may be implemented as a communication component, which may be a communication chip.

The memory 1004 is connected to the processor 1001 through the bus 1005.

The memory 1004 may be configured to store at least one program code, and the processor 1001 may be configured to execute the at least one program code, so as to implement various steps in the foregoing method embodiments.

Additionally, the communication device may be a terminal or a network device. The memory 1004 may be implemented by any type or combination of volatile or non-volatile storage devices including, but not limited to, magnetic or optical disks, electrically erasable programmable Read-Only Memory (Erasable Programmable Read Only Memory, EEPROM), Erasable Programmable Read Only Memory (EPROM), Static Random Access Memory (SRAM), Read-Only Memory (Read -Only Memory, ROM), magnetic memory, flash memory, programmable read-only memory (Programmable Read-Only Memory, PROM).

In an embodiment, a computer-readable storage medium is also provided. The readable storage medium stores executable program codes, and the executable program codes are loaded and performed by a processor to implement the method for indicating the coefficient performed by the communication device provided in each of the above method embodiments.

In an embodiment, a chip is provided, which includes a programmable logic circuit and/or program instructions. When the chip runs on a terminal or a network device, it is used to implement the reporting quantity indication method provided in each method embodiment.

In an embodiment, a communication system is provided, which includes a terminal and a network device, the terminal is configured to implement the method for indicating the coefficient as described above, and the network device is configured to implement the method for indicating the coefficient as described above.

In an embodiment, a computer program product is provided. When the computer program product is performed by a processor of a terminal or a network device, it is configured to implement the method for indicating the coefficient provided by each of the above method embodiments.

Those of ordinary skill in the art can understand that all or part of the steps of implementing the above embodiments can be completed by hardware, or can be completed by instructing relevant hardware through a program, and the program can be stored in a computer-readable storage medium. The storage medium mentioned may be a read-only memory, a magnetic disk or an optical disk, etc.

The above are only optional embodiments of the present disclosure, and are not intended to limit the present disclosure. Any modifications, equivalent replacements, improvements, etc. made within the spirit and principles of the present disclosure shall be included in the protection of the present disclosure, within the range.

**Claims**

1. A method for indicating a coefficient, performed by a terminal, and comprising:

   receiving configuration information sent by a network device, wherein the configuration information is configured to configure codebook parameters of a plurality of Transmission Reception Point (TRP) groups, and each TRP group comprises at least one TRP;
   determining first indication information according to the configuration information, wherein the first indication information is configured to indicate a position of a non-zero coefficient among combination coefficients, the combination coefficients are coefficients determined by the terminal according to the codebook parameters of the plurality of TRP groups, and the combination coefficients are used by the network device to perform precoding calculation; and
   sending the first indication information to the network device.

2. The method according to claim 1, wherein the first indication information is bitmap information, and each bit in the bitmap information is configured to indicate whether a coefficient corresponding to the bit is a non-zero coefficient; or, the first indication information is a combination number, and the combination number has a mapping relationship with the position of the non-zero coefficient.

3. The method according to claim 2, wherein the first indication information is the bitmap information, and determining the first indication information according to the configuration information comprises:

in a case where the codebook parameters of the plurality of TRP groups are the same, determining one piece of bitmap information according to the configuration information, wherein the bitmap information is configured to indicate the position of the non-zero coefficient among the combination coefficients corresponding to the plurality of TRP groups; or,

in a case where codebook parameters of at least two of the plurality of TRP groups are different, determining a plurality of pieces of bitmap information according to the configuration information, wherein each piece of bitmap information is configured to indicate a position of a non-zero coefficient among a combination coefficient corresponding to at least one TRP group.

4.  The method according to claim 2, wherein the first indication information is the combination number, and determining the first indication information according to the configuration information comprises:

in a case where the codebook parameters of the plurality of TRP groups are the same, determining one combination number according to the configuration information, wherein indication information corresponding to the combination number is configured to indicate the position of the non-zero coefficient among the combination coefficients corresponding to the plurality of TRP groups; or,

in a case where codebook parameters of at least two of the plurality of TRP groups are different, determining a plurality of combination numbers according to the configuration information, wherein each combination number corresponds to a position of a non-zero coefficient among a combination coefficient corresponding to at least one TRP group.

5.  The method according to any one of claims 2 to 4, wherein a size of the first indication information is determined according to the codebook parameters.

6.  The method according to any one of claims 1 to 5, wherein the codebook parameters comprise at least one of a number of Spatial Domain (SD) basis vectors, a number of ports, a number of Frequency Domain (FD) basis vectors, and a number of pairs of SD basis vectors and FD basis vectors.

7.  The method according to any one of claims 1 to 6, wherein the method further comprises:

quantizing the combination coefficients of the plurality of TRP groups to obtain the quantized first quantization coefficients; and

sending the first quantization coefficients to the network device.

8.  The method according to claim 7, wherein quantizing the combination coefficients of the plurality of TRP groups to obtain the quantized first quantization coefficients comprises:

normalizing the combination coefficients corresponding to the plurality of TRP groups to obtain the normalized first normalization coefficients; and

differentially quantizing the first normalization coefficients according to a polarization direction to obtain the first quantization coefficients.

9.  The method according to claim 8, wherein the polarization direction comprises a first polarization direction and a second polarization direction, and differentially quantizing the first normalization coefficients according to the polarization direction to obtain the first quantization coefficients comprises:

determining, according to the first normalization coefficients, a reference amplitude and a corresponding differential coefficient of each TRP group in the first polarization direction and a reference amplitude and a corresponding differential coefficient of each TRP group in the second polarization direction; and

quantizing the reference amplitude and the corresponding differential coefficient of each TRP group in the first polarization direction and the reference amplitude and the corresponding differential coefficient of each TRP group in the second polarization direction to obtain the first quantization coefficients.

10. The method according to claim 9, wherein the method further comprises:

sending second indication information to the network device;

wherein the second indication information is configured to indicate that at least one of a largest reference amplitude or a strongest coefficient is not to be quantized and reported.

11. The method according to claim 10, wherein the second indication information is bitmap information, and each bit in the bitmap information is configured to indicate a position of at least one of the largest reference amplitude or the strongest coefficient of a TRP group corresponding to the bit; or,
the second indication information is a combination number, and the combination number is configured to indicate a position of at least one of the largest reference amplitude or the strongest coefficient of each TRP group.

12. The method according to claim 7, wherein quantizing the combination coefficients of the plurality of TRP groups to obtain the quantized first quantization coefficients comprises:

normalizing a combination coefficient corresponding to each of the plurality of TRP groups to obtain a second normalization coefficient and a normalization amplitude corresponding to each TRP group; and
quantizing the normalization amplitude, and differentially quantizing, according to a polarization direction, the second normalization coefficient corresponding to each TRP group to obtain the quantized first quantization coefficients.

13. The method according to claim 12, wherein the polarization direction comprises a first polarization direction and a second polarization direction, and quantizing the normalization amplitude and differentially quantizing, according to the polarization direction, the second normalization coefficient corresponding to each TRP group to obtain the quantized first quantization coefficients comprise:

determining, according to the second normalization coefficient, a reference amplitude and a corresponding differential coefficient of each TRP group in the first polarization direction and a reference amplitude and a corresponding differential coefficient of each TRP group in the second polarization direction, and quantizing the normalization amplitude, the reference amplitude and the corresponding differential coefficient of each TRP group in the first polarization direction and the reference amplitude and the corresponding differential coefficient of each TRP group in the second polarization direction to obtain the first quantization coefficients; or,
determining, according to the second normalization coefficient and the normalization amplitude, the reference amplitude and the corresponding differential coefficient of each TRP group in the first polarization direction and the reference amplitude and the corresponding differential coefficient of each TRP group in the second polarization direction, and quantizing the reference amplitude and the corresponding differential coefficient of each TRP group in the first polarization direction and the reference amplitude and the corresponding differential coefficient of each TRP group in the second polarization direction to obtain the first quantization coefficients, wherein the reference amplitude comprises a product of an initial amplitude of the second normalization coefficient and the normalization amplitude.

14. The method according to claim 13, wherein the method further comprises:

sending third indication information to the network device;
wherein the third indication information is configured to indicate that at least one of a largest reference amplitude, a strongest coefficient or a largest normalization amplitude is not to be quantized and reported.

15. The method according to claim 14, wherein the third indication information is bitmap information, and each bit in the bitmap information is configured to indicate a position of at least one of the largest reference amplitude, the strongest coefficient or the largest normalization amplitude of a TRP group corresponding to the bit; or,
the third indication information is a combination number, and the combination number is configured to indicate a position of at least one of the largest reference amplitude, the strongest coefficient or the largest normalization amplitude of each TRP group.

16. The method according to claim 9 or 13, wherein:

reference amplitudes of the plurality of TRP groups in the first polarization direction are the same, and reference amplitudes of the plurality of TRP groups in the second polarization reference direction are the same; or,
reference amplitudes of at least two of the plurality of TRP groups in the first polarization direction are different, reference amplitudes of the at least two of the plurality of TRP groups in the second polarization reference direction are different, reference amplitudes of a plurality of TRPs comprised in each TRP group in the first polarization direction are the same or different, and reference amplitudes of the plurality of TRPs comprised in each TRP group in the second polarization direction are the same or different; or,
the reference amplitudes of the at least two of the plurality of TRP groups in the first polarization direction are different, the reference amplitudes of the plurality of TRP groups in the second polarization reference direction are the same, and the reference amplitudes of the plurality of TRPs comprised in each TRP group in the first polarization direction are the same or different; or,

the reference amplitudes of the plurality of TRP groups in the first polarization direction are the same, the reference amplitudes of the at least two of the plurality of TRP groups in the second polarization reference direction are different, and the reference amplitudes of the plurality of TRPs comprised in each TRP group in the second polarization direction are the same or different.

17. A method for indicating a coefficient, performed by a network device, and comprising:

sending configuration information to a terminal, wherein the configuration information is configured to configure codebook parameters of a plurality of Transmission Reception Point (TRP) groups, and each TRP group comprises at least one TRP; and

receiving first indication information sent by the terminal, wherein the first indication information is determined by the terminal according to the configuration information, the first indication information is configured to indicate a position of a non-zero coefficient among combination coefficients, the combination coefficients are coefficients determined by the terminal according to the codebook parameters of the plurality of TRP groups, and the combination coefficients are used by the network device to perform precoding calculation.

18. The method according to claim 17, wherein the first indication information is bitmap information, and each bit in the bitmap information is configured to indicate whether a coefficient corresponding to the bit is a non-zero coefficient; or, the first indication information is a combination number, and the combination number has a mapping relationship with the position of the non-zero coefficient.

19. The method according to claim 17 or 18, wherein a size of the first indication information is determined according to the codebook parameters.

20. The method according to any one of claims 17 to 19, wherein the codebook parameters comprise at least one of a number of Spatial Domain (SD) basis vectors, a number of ports, a number of Frequency Domain (FD) basis vectors, and a number of pairs of SD basis vectors and FD basis vectors.

21. The method according to any one of claims 17 to 20, wherein the method further comprises:
receiving first quantization coefficients sent by the terminal, wherein the first quantization coefficients are obtained by quantizing, by the terminal, the combination coefficients of the plurality of TRP groups.

22. The method according to claim 21, wherein the first quantization coefficients are obtained by normalizing, by the terminal, the combination coefficients corresponding to the plurality of TRP groups to obtain the normalized first normalization coefficients and differentially quantizing the first normalization coefficients according to a polarization direction.

23. The method according to claim 22, wherein the polarization direction comprises a first polarization direction and a second polarization direction, and the first quantization coefficients are obtained by determining, by the terminal, according to the first normalization coefficients, a reference amplitude and a corresponding differential coefficient of each TRP group in the first polarization direction and a reference amplitude and a corresponding differential coefficient of each TRP group in the second polarization direction, and quantizing the reference amplitude and the corresponding differential coefficient of each TRP group in the first polarization direction and the reference amplitude and the corresponding differential coefficient of each TRP group in the second polarization direction.

24. The method according to claim 23, wherein the method further comprises:
receiving second indication information sent by the terminal, wherein the second indication information is configured to indicate that at least one of a largest reference amplitude or a strongest coefficient is not to be quantized and reported.

25. The method according to claim 24, wherein the second indication information is bitmap information, and each bit in the bitmap information is configured to indicate a position of at least one of the largest reference amplitude or the strongest coefficient of a TRP group corresponding to the bit; or,
the second indication information is a combination number, and the combination number is configured to indicate a position of at least one of the largest reference amplitude or the strongest coefficient of each TRP group.

26. The method according to claim 21, wherein the first quantization coefficients are obtained by normalizing, by the terminal, a combination coefficient corresponding to each of the plurality of TRP groups to obtain a second normalization coefficient and a normalization amplitude corresponding to each TRP group, and quantizing the normalization amplitude, and differentially quantizing, according to a polarization direction, the second normalization coefficient corresponding to each TRP group.

27. The method according to claim 26, wherein the polarization direction comprises a first polarization direction and a second polarization direction, and the first quantization coefficients are obtained by determining, by the terminal, according to the second normalization coefficient, a reference amplitude and a corresponding differential coefficient of each TRP group in the first polarization direction and a reference amplitude and a corresponding differential coefficient of each TRP group in the second polarization direction, and quantizing the normalization amplitude, the reference amplitude and the corresponding differential coefficient of each TRP group in the first polarization direction and the reference amplitude and the corresponding differential coefficient of each TRP group in the second polarization direction, or, the first quantization coefficients are obtained by determining, by the terminal, according to the second normalization coefficient and the normalization amplitude, the reference amplitude and the corresponding differential coefficient of each TRP group in the first polarization direction and the reference amplitude and the corresponding differential coefficient of each TRP group in the second polarization direction, and quantizing the reference amplitude and the corresponding differential coefficient of each TRP group in the first polarization direction and the reference amplitude and the corresponding differential coefficient of each TRP group in the second polarization direction, wherein the reference amplitude comprises a product of an initial amplitude of the second normalization coefficient and the normalization amplitude.

28. The method according to claim 27, wherein the method further comprises:
receiving third indication information sent by the terminal, wherein the third indication information is configured to indicate that at least one of a largest reference amplitude, a strongest coefficient or a largest normalization amplitude is not to be quantized and reported.

29. The method according to claim 28, wherein the third indication information is bitmap information, and each bit in the bitmap information is configured to indicate a position of at least one of the largest reference amplitude, the strongest coefficient or the largest normalization amplitude of a TRP group corresponding to the bit; or,
the third indication information is a combination number, and the combination number is configured to indicate a position of at least one of the largest reference amplitude, the strongest coefficient or the largest normalization amplitude of each TRP group.

30. The method according to claim 23 or 27, wherein:

reference amplitudes of the plurality of TRP groups in the first polarization direction are the same, and reference amplitudes of the plurality of TRP groups in the second polarization reference direction are the same; or,
reference amplitudes of at least two of the plurality of TRP groups in the first polarization direction are different, reference amplitudes of the at least two of the plurality of TRP groups in the second polarization reference direction are different, reference amplitudes of a plurality of TRPs comprised in each TRP group in the first polarization direction are the same or different, and reference amplitudes of the plurality of TRPs comprised in each TRP group in the second polarization direction are the same or different; or,
the reference amplitudes of the at least two of the plurality of TRP groups in the first polarization direction are different, the reference amplitudes of the plurality of TRP groups in the second polarization reference direction are the same, and the reference amplitudes of the plurality of TRPs comprised in each TRP group in the first polarization direction are the same or different; or,
the reference amplitudes of the plurality of TRP groups in the first polarization direction are the same, the reference amplitudes of the at least two of the plurality of TRP groups in the second polarization reference direction are different, and the reference amplitudes of the plurality of TRPs comprised in each TRP group in the second polarization direction are the same or different.

31. An apparatus for indicating a coefficient, comprising:

a receiving module, configured to receive configuration information sent by a network device, wherein the configuration information is configured to configure codebook parameters of a plurality of Transmission Reception Point (TRP) groups, and each TRP group comprises at least one TRP;
a determination module, configured to determine first indication information according to the configuration

**EP 4 564 692 A1**

information, wherein the first indication information is configured to indicate a position of a non-zero coefficient among combination coefficients, the combination coefficients are coefficients determined by the terminal according to the codebook parameters of the plurality of TRP groups, and the combination coefficients are used by the network device to perform precoding calculation; and
a sending module, configured to send the first indication information to the network device.

32. An apparatus for indicating a coefficient, comprising:

a sending module, configured to send configuration information to a terminal, wherein the configuration information is configured to configure codebook parameters of a plurality of Transmission Reception Point (TRP) groups, and each TRP group comprises at least one TRP; and
a receiving module, configured to receive first indication information sent by the terminal, wherein the first indication information is determined by the terminal according to the configuration information, the first indication information is configured to indicate a position of a non-zero coefficient among combination coefficients, the combination coefficients are coefficients determined by the terminal according to the codebook parameters of the plurality of TRP groups, and the combination coefficients are used by the network device to perform precoding calculation.

33. A terminal, comprising:

a processor; and
a transceiver connected to the processor;
wherein the processor is configured to load and execute executable instructions to implement the method for indicating the coefficient according to any one of claims 1 to 16.

34. A network device, comprising:

a processor; and
a transceiver connected to the processor;
wherein the processor is configured to load and execute executable instructions to implement the method for indicating the coefficient according to any one of claims 17 to 30.

35. A communication system, comprising a terminal and a network device, wherein the terminal is configured to implement the method for indicating the coefficient according to any one of claims 1 to 16, and the network device is configured to implement the method for indicating the coefficient according to any one of claims 17 to 30.

36. A computer-readable storage medium having executable program codes stored thereon, wherein the executable program codes are loaded and executed by a processor to implement the method for indicating the coefficient according to any one of claims 1 to 30.

41

TRP1  TRP2  TRP3

*H1*  *H2*  *H3*

Network device

Terminal

FIG. 1

FIG. 2

Terminal

Network
device

Step 301: the network device sends
configuration information to the
terminal, the configuration information
is configured to configure codebook
parameters of a plurality of TRP groups,
and each TRP group includes at least
one TRP

Step 302: the terminal receives the configuration
information sent by the network device

Step 303: the terminal determines first indication
information according to the configuration information,
the first indication information is configured to indicate
a position of a non-zero coefficient among combination
coefficients, the combination coefficients are
coefficients determined by the terminal according to the
codebook parameters of the plurality of TRP groups,
and the combination coefficients are used by the
network device to perform precoding calculation

Step 304: the terminal sends the first
indication information to the network
device

Step 305: the network device receives the first
indication information sent by the terminal

FIG. 3

Terminal

Network
device

Step 401: the terminal quantizes the combination
coefficients of the plurality of TRP groups to
obtain the quantized first quantization coefficients

Step 402: the terminal sends the first
quantization coefficients to the network
device

Step 403: the network device receives the first
quantization coefficients sent by the terminal

FIG. 4

501

Receive, by the terminal, the configuration information sent by the network device

Determine, by the terminal, first indication information according to the configuration information, the first indication information is configured to indicate a position of a non-zero coefficient among combination coefficients, the combination coefficients are coefficients determined by the terminal according to the codebook parameters of the plurality of TRP groups, and the combination coefficients are used by the network device to perform precoding calculation

502

503

Send, by the terminal, the first indication information to the network device

FIG. 5

Send, by the network device, configuration information to a terminal, the configuration information is configured to configure codebook parameters of a plurality of TRP groups, and each TRP group includes at least one TRP

601

Receive, by the network device, first indication information sent by the terminal, the first indication information is configured to indicate a position of a non-zero coefficient among combination coefficients, the combination coefficients are coefficients determined by the terminal according to the codebook parameters of the plurality of TRP groups, and the combination coefficients are used by the network device to perform precoding calculation

602

FIG. 6

701

Receiving module

702

Determination module

703

Sending module

FIG. 7

Receiving
module /701

Determination
module /702

Quantization
module /704

Sending
module /703

FIG. 8

Sending
module /901

Receiving
module /902

FIG. 9

Processor /1001

Transmitter /1003

Bus /1005

Receiver /1002

Memory /1004

FIG. 10

## INTERNATIONAL SEARCH REPORT

International application No.

**PCT/CN2022/108049**

### A. CLASSIFICATION OF SUBJECT MATTER

H04B 7/06(2006.01)i

According to International Patent Classification (IPC) or to both national classification and IPC

### B. FIELDS SEARCHED

Minimum documentation searched (classification system followed by classification symbols)

H04B; H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 码本, 预编码, 非零, 系数, 位置, 多TRP, codebook, precoding, non-zero, coefficient, position, mTRP, multi TRP

### C. DOCUMENTS CONSIDERED TO BE RELEVANT

| Category* | Citation of document, with indication, where appropriate, of the relevant passages | Relevant to claim No. |
|---|---|---|
| X | CN 111525947 A (TELECOMMUNICATIONS TECHNOLOGY RESEARCH INSTITUTE CO., LTD.) 11 August 2020 (2020-08-11)<br>    description, paragraphs 55-88 and 577-579 | 1-36 |
| X | CN 111726154 A (TELECOMMUNICATIONS TECHNOLOGY RESEARCH INSTITUTE CO., LTD.) 29 September 2020 (2020-09-29)<br>    description, paragraphs 7-209 | 1-36 |
| A | US 2022029676 A1 (FRAUNHOFER-GESELLSCHAFT ZUR FÖRDERUNG DER ANGEWANDTEN FORSCHUNG E.V.) 27 January 2022 (2022-01-27)<br>    entire document | 1-36 |
| A | SAMSUNG. "Further Enhancements on MIMO for NR"<br>*3GPP TSG RAN Meeting #94-e RP-213011*, 17 December 2021 (2021-12-17),<br>    entire document | 1-36 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 November 2022** | **16 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/108049**

| Patent document cited in search report | | | Publication date (day/month/year) | Patent family member(s) | | | Publication date (day/month/year) |
|---|---|---|---|---|---|---|---|
| CN | 111525947 | A | 11 August 2020 | KR | 20210116590 | A | 27 September 2021 |
| | | | | WO | 2020156136 | A1 | 06 August 2020 |
| | | | | EP | 3920431 | A1 | 08 December 2021 |
| | | | | US | 2022116093 | A1 | 14 April 2022 |
| CN | 111726154 | A | 29 September 2020 | WO | 2020186871 | A1 | 24 September 2020 |
| | | | | KR | 20210138749 | A | 19 November 2021 |
| | | | | EP | 3944511 | A1 | 26 January 2022 |
| | | | | US | 2022149909 | A1 | 12 May 2022 |
| US | 2022029676 | A1 | 27 January 2022 | EP | 3935743 | A1 | 12 January 2022 |
| | | | | WO | 2020182269 | A1 | 17 September 2020 |
| | | | | CN | 113796020 | A | 14 December 2021 |

Form PCT/ISA/210 (patent family annex) (January 2015)